(19) Europäisches Patentamt / European Patent Office / Office européen des brevets

(11) **EP 4 663 784 A1**

(12) **EUROPEAN PATENT APPLICATION**
published in accordance with Art. 153(4) EPC

(43) Date of publication:
**17.12.2025 Bulletin 2025/51**

(21) Application number: **23935361.8**

(22) Date of filing: **28.04.2023**

(51) International Patent Classification (IPC):
**C21D 9/46** (2006.01)    **C22C 38/00** (2006.01)
**C22C 38/60** (2006.01)    **C23C 2/06** (2006.01)

(52) Cooperative Patent Classification (CPC):
**C21D 9/46; C22C 38/00; C22C 38/60; C23C 2/06**

(86) International application number:
**PCT/JP2023/016786**

(87) International publication number:
**WO 2024/224583 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: JFE Steel Corporation
**Tokyo 100-0011 (JP)**

(72) Inventors:
• **TERASHIMA, Shotaro**
  **Tokyo 100-0011 (JP)**
• **NAKAGAITO, Tatsuya**
  **Tokyo 100-0011 (JP)**
• **KAWASAKI, Yoshiyasu**
  **Tokyo 100-0011 (JP)**
• **ASAKAWA, Taiyo**
  **Tokyo 100-0011 (JP)**

(74) Representative: **Haseltine Lake Kempner LLP**
**Bürkleinstrasse 10**
**80538 München (DE)**

(54) **ZINC-PLATED STEEL SHEET, MEMBER, AND METHODS FOR PRODUCING SAME**

(57) To provide a technique of a galvanized steel sheet that has a high yield ratio, high bendability and stretch flangeability, and high hydrogen embrittlement resistance, and has a TS of 780 MPa or more and less than 1180 MPa.

A galvanized steel sheet that has a steel microstructure including, in terms of area fraction, ferrite: less than 65%, a total of martensite and bainite: 25% or more, and retained austenite: 3% or more and 10% or less, wherein 70% or more of the entire martensite in the steel microstructure at 1/8 to 3/8 of the thickness of a base steel sheet is tempered martensite containing carbide with an average grain size of 50 nm or more and 200 nm or less, and that has a galvanized layer formed on the base steel sheet, wherein the galvanized steel sheet has a TS of 780 MPa or more and less than 1180 MPa and a yield ratio of 0.60 or more, and the amount of diffusible hydrogen is 0.45 ppm by mass or less.

**EP 4 663 784 A1**

**Description**

Technical Field

The present invention relates to a high-strength galvanized steel sheet with high workability, a member manufactured using the high-strength galvanized steel sheet as a material, and a method for manufacturing them. A galvanized steel sheet according to the present invention can be suitably used mainly for applications as an automotive steel sheet.

Background Art

In recent years, from the perspective of global environmental conservation, there has been a strong demand for improvement of fuel efficiency toward reduction of $CO_2$ emissions of automobiles. Along with this, there has been an active movement to reduce the weight of vehicle bodies by reducing the thickness of vehicle body parts, and there is an increasing need to increase the strength of steel sheets that are materials for vehicle body parts. In particular, from the perspective of ensuring crash safety of an automobile, a steel sheet material used around a cabin is required to have not only high tensile strength but also high yield strength. Furthermore, it is also necessary to have press formability so as not to impair the degree of freedom of the part shape due to the increase in strength. Furthermore, as corrosion progresses during use as an automotive part, the original material strength may not be maintained in the event of a collision, so that the use of hot-dip galvanized steel sheets with high corrosion resistance is becoming more widespread.

On the other hand, reinforcement of a steel sheet involves a concern about the occurrence of hydrogen embrittlement. Hydrogen embrittlement of a high-strength steel sheet may be caused not only by externally introduced hydrogen due to corrosion or the like during use, but also by hydrogen introduced during the production process. In particular, in the case of a hot-dip galvanized steel sheet, as a typical method, the steel sheet is manufactured by continuously performing a series of steps from annealing to hot-dip galvanizing treatment in a hydrogen-containing atmosphere for the purpose of suppressing reduction and oxidation of the steel sheet. Thus, a galvanized layer is formed in a state in which hydrogen introduced into the steel from the atmosphere remains. Since hydrogen diffusion during galvanization is very slow and becomes a barrier against the release of diffusible hydrogen in the steel to the outside, diffusible hydrogen may remain, and hydrogen embrittlement during working may promote crack initiation, which incur a risk of causing deterioration of local ductility, in particular, bendability or stretch flangeability. Thus, it is important to establish a hot-dip galvanized steel sheet with high hydrogen embrittlement resistance in which the amount of hydrogen in the steel is sufficiently reduced, and a method for manufacturing the hot-dip galvanized steel sheet.

With respect to problems related to workability and hydrogen embrittlement resistance of a high-strength hot-dip galvanized steel sheet, for example, Patent Literature 1 discloses a high-strength hot-dip galvanized steel sheet with high bendability and a method for manufacturing the high-strength hot-dip galvanized steel sheet. Patent Literature 2 discloses a high-strength steel sheet with high ductility and delayed fracture resistance and with a TS of 900 MPa or more, a method for manufacturing a high-strength cold-rolled steel sheet, and a method for manufacturing a high-strength galvanized steel sheet.

Citation List

Patent Literature

PTL 1: International Publication No. WO 2016/113788
PTL 2: Japanese Unexamined Patent Application Publication No. 2011-111671

Summary of Invention

Technical Problem

However, Patent Literature 1 describes improvement of bendability by refinement of martensite grains but does not disclose a method for improving hydrogen embrittlement resistance. Patent Literature 2 describes satisfying both ductility and hydrogen embrittlement resistance and describes hydrogen embrittlement resistance after working, but does not describe improvement of hydrogen embrittlement resistance caused by hydrogen in the steel introduced during production.

From the production methods disclosed in Patent Literature 1 and Patent Literature 2, it is thought that a large amount of hydrogen remains in the steel, and there is a risk of hydrogen embrittlement in a working process, such as deterioration of bendability or stretch flangeability or crack initiation in a nugget of a spot weld.

The present invention has been made in view of the above circumstances and aims to provide a galvanized steel sheet that is suitable for automotive applications, has a high yield ratio (YR), high bendability and stretch flangeability, and high hydrogen embrittlement resistance, and has a tensile strength (TS) of 780 MPa or more and less than 1180 MPa, a member, and a method for manufacturing them.

The term "high yield ratio", as used herein, means that a JIS No. 5 test piece for tensile test (JIS Z 2201) taken in the direction perpendicular to the rolling direction has a YR of 0.60 or more at a strain rate of $10^{-3}$/s in a tensile test according to the provisions of JIS Z 2241 (2011).

The tensile strength (TS) refers to tensile strength determined by taking a JIS No. 5 test piece for tensile test (JIS Z 2201) in the direction perpendicular to the rolling direction and performing a tensile test according to the provisions of JIS Z 2241 (2011) at a strain rate of $10^{-3}$/s.

The phrase "high bendability" means that a 35 mm x 100 mm strip specimen is taken from a galvanized steel sheet such that the direction parallel to the rolling direction becomes a bending test axis, a 90-degree V-bending test is performed at a stroke speed of 50 mm/s, at an indentation load of 10 ton, for a press holding time of 5 seconds, and at various bending radii, a ridge line portion of a bending peak of the test specimen is observed with a 10x magnifier, R/t is calculated by dividing a minimum bending radius R (mm) at which a crack with a length of 0.5 mm or more is not recognized by the sheet thickness (mm), and any of the following (A) and (B) is satisfied.

(A) TS: 780 MPa or more and less than 980 MPa and R/t: 4.5 or less
(B) TS: 980 MPa or more and less than 1180 MPa and R/t: 5.0 or less

The phrase "high stretch flangeability" means that a 100 mm x 100 mm test specimen is taken from a galvanized steel sheet, a hole with a diameter of 10 mm is formed by punching at a clearance of 12.5% in the central portion of the test specimen, then a die with an inner diameter of 75 mm is used to apply a blank holding force of 9 ton (88.26 kN) around the hole, a conical punch with a vertex angle of 60 degrees is pushed into the hole to expand the hole, the diameter of the hole is measured at the time of crack initiation, and the limiting hole expansion ratio $\lambda$ (%) calculated using the following formula (1) is 35% or more.

$$\lambda\ (\%)\ =\ \{(Df\ -\ D0)/D0\}\ x\ 100\qquad(1)$$

Df: diameter (mm) of hole at the time of crack initiation
D0: diameter (mm) of hole before hole expansion

The phrase "high hydrogen embrittlement resistance" means that a nugget formed by spot welding by the following method has a crack of 100 $\mu$m or less.

(1) A spacer with a thickness of 2 mm is placed at both ends of a 30 mm x 100 mm test specimen taken from a galvanized steel sheet, and the center between the spacers is spot-welded to prepare a welded specimen.
(2) For the spot welding, an inverter DC resistance spot welding machine is used, and a dome-shaped electrode with a tip diameter of 6 mm made of chromium copper is used. The welding pressure is 380 kgf, the weld time is 16 cycles/50 Hz, and the holding time is 5 cycles/50 Hz.
(3) The welding current value is adjusted so as to form a nugget diameter corresponding to the sheet thickness. The nugget diameter satisfies the following formula (2).

$$3.0\ x\ t1/2\ <\ nugget\ diameter\ <\ 3.5\ x\ t1/2\qquad(2)$$

In the formula (2), t denotes the sheet thickness (mm).
(4) After leaving it for 24 hours from the spot welding, the spacer portions are cut off to observe a cross section of the nugget.

Solution to Problem

The present inventors have conducted intensive studies to solve the above problems. As a result, it was found that the amount of diffusible hydrogen in the steel can be reduced by optimizing the steel sheet microstructure and appropriately controlling the precipitation form of carbide in the steel to utilize the carbide as a hydrogen trap site, thereby making it possible to manufacture a high-strength galvanized steel sheet with a high yield ratio, high bendability, and a low crack initiation risk in a nugget of a spot weld.

The present invention has been accomplished on the basis of these findings, and the gist thereof is described below.

[1] A galvanized steel sheet including: a base steel sheet; and a galvanized layer formed on the base steel sheet,

wherein the base steel sheet has a steel microstructure including, in terms of area fraction, ferrite: less than 65%, a total of martensite and bainite: 25% or more, and retained austenite: 3% or more and 10% or less,
70% or more by area of the entire martensite in the steel microstructure at 1/8 to 3/8 of a thickness of the base steel sheet is tempered martensite containing carbide with an average grain size of 50 nm or more and 200 nm or less,
the galvanized steel sheet has a tensile strength of 780 MPa or more and less than 1180 MPa,
the galvanized steel sheet has a yield ratio of 0.60 or more, and
an integrated amount of hydrogen released when the base steel sheet is heated from room temperature to 200°C is 0.45 ppm by mass or less.

[2] The galvanized steel sheet according to [1], wherein

the base steel sheet has a steel component containing, on a mass percent basis,
C: 0.080% or more and 0.300% or less,
Si: 0.20% or more and 2.00% or less,
Mn: 1.00% or more and 4.00% or less,
P: 0.10% or less,
S: 0.0200% or less,
Al: 0.003% or more and 0.100% or less, and
N: 0.0100% or less, and
the remainder is composed of Fe and incidental impurities.

[3] The galvanized steel sheet according to [2], wherein

the steel component further contains, on a mass percent basis, at least one selected from
B: 0.0100% or less,
Ti: 0.200% or less,
Nb: 0.200% or less,
Sb: 0.200% or less,
Sn: 0.200% or less,
V: 0.100% or less,
Cu: 2.00% or less,
Cr: 2.00% or less,
Ni: 2.00% or less,
Mo: 1.00% or less,
Ta: 0.100% or less,
W: 0.500% or less,
Zr: 0.020% or less,
Ca: 0.0200% or less,
Mg: 0.0200% or less,
Zn: 0.020% or less,
Co: 0.020% or less,
Ce: 0.0200% or less,
Se: 0.0200% or less,
Te: 0.0200% or less,
Ge: 0.0200% or less,
As: 0.0200% or less,
Sr: 0.0200% or less,
Cs: 0.0200% or less,
Hf: 0.0200% or less,
Pb: 0.0200% or less,
Bi: 0.0200% or less, and
REM (excluding Ce): 0.0200% or less.

[4] The galvanized steel sheet according to any one of [1] to [3], wherein when a region of 200 μm or less from a surface of the base steel sheet in a thickness direction is defined as a surface layer, the base steel sheet has, in the surface layer, a surface soft layer with a Vickers hardness of 85% or less with respect to a Vickers hardness at a quarter thickness position.

[5] The galvanized steel sheet according to [4], wherein when nanohardness is measured at 300 or more points in a 50 μm x 50 μm region of a sheet surface at a quarter depth position and at a half depth position of the surface soft layer from the surface of the base steel sheet in the thickness direction, a ratio of a number of measurements in which the sheet surface at the quarter depth position of the surface soft layer from the surface of the base steel sheet in the thickness direction has a nanohardness of 7.0 GPa or more to a total number of measurements is 0.10 or less, the nanohardness of the sheet surface at the quarter depth position of the surface soft layer from the surface of the base steel sheet in the thickness direction has a standard deviation σ of 1.8 GPa or less, and the nanohardness of the sheet surface at the half depth position of the surface soft layer from the surface of the base steel sheet in the thickness direction has a standard deviation σ of 2.2 GPa or less.

[6] The galvanized steel sheet according to any one of [1] to [5], including a metal coated layer formed between the base steel sheet and the galvanized layer on one or both surfaces of the galvanized steel sheet.

[7] The galvanized steel sheet according to any one of [1] to [6], wherein the galvanized layer is a galvannealed layer.

[8] The galvanized steel sheet according to any one of [1] to [7], wherein when the base steel sheet is heated from room temperature to 600°C, an integrated amount of hydrogen released in a temperature range of 350°C to 600°C is 0.05 ppm by mass or more.

[9] A member produced by using the galvanized steel sheet according to any one of [1] to [8].

[10] A method for manufacturing a galvanized steel sheet, the method including:

a hot rolling step of heating a slab with the steel component according to [2] or [3] to a temperature range of 1100°C to 1350°C, hot-rolling the slab at a finish rolling delivery temperature of 800°C to 950°C, and coiling the hot-rolled slab at a coiling temperature of 650°C or less;

a reduction step of holding a steel sheet after the hot rolling step at 700°C or more for 20 seconds or more in a reducing atmosphere with a hydrogen concentration of 8% or more by volume and 30% or less by volume;

a soaking step of holding the steel sheet after the reduction step at 750°C or more for 20 seconds or more and 300 seconds or less in a soaking atmosphere with a hydrogen concentration of 0.2% or more by volume and 8% or less by volume;

a first cooling step of cooling the steel sheet after the soaking step;

a galvanization step of forming a galvanized layer on a surface of the steel sheet after the first cooling step;

a second cooling step of cooling the steel sheet after the galvanization step to a cooling stop temperature of 100°C to 300°C at an average cooling rate of 20°C/s or less from a temperature range of 350°C to 450°C down to (Ms temperature - 100°C) while the steel sheet is retained in a temperature range of 100°C to 350°C for 5 seconds or more; and

a reheating step of holding the steel sheet after the second cooling step in a temperature range of the cooling stop temperature or higher and 450°C or less for 5 to 600 seconds.

[11] The method for manufacturing a galvanized steel sheet according to [10], wherein after the galvanization step, forming the galvanized layer on the surface of the steel sheet is followed by alloying treatment.

[12] The method for manufacturing a galvanized steel sheet according to [10] or [11], including a cold rolling step of performing cold rolling at a rolling reduction of 20% or more after the hot rolling step and before the reduction step.

[13] The method for manufacturing a galvanized steel sheet according to any one of [10] to [12], wherein in the first cooling step, the steel sheet after the soaking step is cooled from 600°C to 900°C down to 150°C to 500°C at an average cooling rate of 20°C/s or less in an atmosphere with a hydrogen concentration of 0.5% or more by volume and 30% or less by volume and with a dew point of 0°C or less.

[14] The method for manufacturing a galvanized steel sheet according to any one of [10] to [13], wherein in the second cooling step, cooling is performed to a cooling stop temperature of 100°C to 300°C at an average cooling rate of 10°C/s or less from a temperature range of 350°C to 450°C down to (Ms temperature - 100°C) while the steel sheet is retained in a temperature range of 100°C to 350°C for 10 seconds or more.

[15] The method for manufacturing a galvanized steel sheet according to any one of [10] to [14], wherein the soaking atmosphere in the soaking step is an atmosphere with a dew point of -30°C or more.

[16] The method for manufacturing a galvanized steel sheet according to any one of [10] to [15], including a precoating step of performing metal coating on one or both surfaces of the steel sheet after the hot rolling step and before the reduction step to form a metal coated layer.

[17] The method for manufacturing a galvanized steel sheet according to any one of [10] to [16], including an oxidation step of heating the steel sheet after the hot rolling step and before the reduction step to 600°C or more in an oxidizing atmosphere with an oxygen concentration of 1000 ppm by volume or more and 30000 ppm by volume or less.

[18] A method for manufacturing a member, including a step of subjecting the galvanized steel sheet according to any one of [1] to [8] to at least one of forming and joining to manufacture a member.

Advantageous Effects of Invention

A galvanized steel sheet provided according to the present invention has a tensile strength of 780 MPa or more and less than 1180 MPa, a yield ratio of 0.60 or more, and high bendability, stretch flangeability, and hydrogen embrittlement resistance.

A member provided according to the present invention has a tensile strength of 780 MPa or more and less than 1180 MPa, a yield ratio of 0.60 or more, and high bendability, stretch flangeability, and hydrogen embrittlement resistance.

Brief Description of Drawings

[Fig. 1] Fig. 1 is an explanatory view of (a) primary bending and (b) secondary bending in a U-bending + tight bending test and a V-bending + orthogonal VDA bending test of Examples.

[Fig. 2] Fig. 2 is (a) a front view, (b) a perspective view, and (c) a schematic view for explaining an axial crushing test of a test member manufactured for the axial crushing test of Examples in which a hat-shaped member and a steel sheet are spot-welded.

Description of Embodiments

The present invention will be described in detail below.

<Galvanized Steel Sheet>

A galvanized steel sheet according to the present invention is a galvanized steel sheet including: a base steel sheet; and a galvanized layer formed on the base steel sheet, wherein the base steel sheet has a steel microstructure including, in terms of area fraction, ferrite: less than 65%, a total of martensite and bainite: 25% or more, and retained austenite: 3% or more and 10% or less, 70% or more by area of the entire martensite in the steel microstructure at 1/8 to 3/8 of a thickness of the base steel sheet is tempered martensite containing carbide with an average grain size of 50 nm or more and 200 nm or less, the galvanized steel sheet has a tensile strength of 780 MPa or more and less than 1180 MPa, the galvanized steel sheet has a yield ratio of 0.60 or more, and an integrated amount of hydrogen released when the base steel sheet from which the galvanized layer is peeled off is heated from room temperature to 200°C is 0.45 ppm by mass or less.

Steel Microstructure

First, the area fraction of each microstructure in a base steel sheet according to the present invention will be described. The area fraction of each microstructure refers to the area fraction of each constituent phase to the entire observed area. The area fraction of each microstructure can be determined from image data obtained by polishing a cross section of a steel sheet parallel to the rolling direction, then corroding the cross section with a nital solution, and photographing the cross section with a scanning electron microscope (SEM) at a magnification of 1500 times. The measurement regions are a region from the surface to 1/8 of the sheet thickness and a region from 1/8 to 3/8 of the sheet thickness.

In the image data, ferrite can be distinguished as black, bainite as black including island-like retained austenite or as gray including carbides with the same orientation, tempered martensite as light gray including fine carbides with random orientations, and retained austenite as white. Here, since both as-quenched martensite and retained austenite exhibit white color, it may be difficult to distinguish them in a SEM image. Thus, the area fraction of retained austenite is individually determined by measuring the X-ray diffraction intensity, and the area fraction of as-quenched martensite is determined by subtracting the area fraction of retained austenite from the area fraction of the white portion described above. The area fraction of retained austenite is determined from the ratio of the integrated X-ray diffraction intensity of (200), (220), and (311) planes of fcc iron to the integrated X-ray diffraction intensity of (200), (211), and (220) planes of bcc iron on a plane at a quarter thickness. Retained austenite is calculated as a volume fraction by the above measurement, and assuming that the retained austenite is three-dimensionally homogeneous, the volume fraction of the retained austenite is defined as the area fraction of the retained austenite.

Martensite defined in the present invention includes both as-quenched martensite and tempered martensite and may be composed of as-quenched martensite and tempered martensite.

Area fraction of ferrite: less than 65%

When the area fraction of ferrite is 65% or more, a TS of 780 MPa or more may not be achieved. Thus, the area fraction of ferrite is less than 65%, preferably less than 60%. Although the lower limit is not particularly limited and may be 0%, from the perspective of the balance between tensile strength and ductility, the area fraction of ferrite is preferably 5% or more, more preferably 10% or more.

Total area fraction of martensite (including tempered martensite) and bainite: 25% or more

Martensite is a hard microstructure formed from austenite at a low temperature equal to or lower than the martensite transformation starting point (Ms temperature). Martensite in the present invention includes not only martensite as quenched (as-quenched martensite) but also tempered martensite produced by tempering the formed martensite at a predetermined temperature.
Bainite is formed from austenite at a relatively low temperature equal to or higher than the Ms temperature and is a hard microstructure in which fine carbides are dispersed in needle-like or plate-like ferrite. Martensite and bainite are microstructures responsible for the strength of a steel sheet according to the present invention, and when the total area fraction is less than 25%, a TS of 780 MPa or more may not be achieved. Thus, the total area fraction of martensite and bainite is 25% or more, preferably 30% or more. Any one of martensite and bainite may be in the above range. Although the upper limit is not particularly limited, the total area fraction of martensite (including tempered martensite) and bainite is preferably 85% or less, more preferably 80% or less, from the perspective of more suitably controlling the balance between TS and ductility.

Area fraction of retained austenite: 3% or more and 10% or less

An excessively large amount of retained austenite may promote crack initiation due to deformation-induced transformation into hard martensite during bending or during boring by punching and impair bendability and flangeability. This effect becomes significant when retained austenite constitutes more than 10%. Thus, the area fraction of retained austenite is 10% or less. The area fraction of retained austenite is preferably 9% or less, more preferably 8% or less. On the other hand, less than 3% of retained austenite results in insufficient ductility. Thus, the retained austenite is 3% or more. The area fraction of retained austenite is preferably 4% or more, more preferably 5% or more.
As long as ferrite, martensite, bainite, and retained austenite satisfy the above-described ranges, the remainder of the microstructure may include 5% or less by area of another microstructure. The other microstructure may be pearlite or the like.
70% or more by area of the entire martensite in steel microstructure at 1/8 to 3/8 of thickness of base steel sheet: tempered martensite containing carbide with average grain size of 50 nm or more and 200 nm or less
In the present invention, a high yield ratio can be achieved through precipitation strengthening by controlling the microstructure such that 70% or more by area of the entire martensite contained in the microstructure at 1/8 to 3/8 of the thickness of the base steel sheet is tempered martensite containing carbide of a predetermined size.
At the same time, high hydrogen embrittlement resistance can be achieved by utilizing fine carbides as hydrogen trap sites in the steel to reduce the amount of diffusible hydrogen. To sufficiently produce these effects, the area fraction of tempered martensite containing carbide of a predetermined size is 70% or more, preferably 80% or more, and may be 100%, with respect to the entire martensite contained in the microstructure at 1/8 to 3/8 of the thickness of the base steel sheet. These effects can be produced when the carbide has an average grain size of 50 nm or more and 200 nm or less. In general, when a precipitate has a constant volume fraction, a precipitate with a smaller grain size is more advantageous for precipitation strengthening. Furthermore, from the perspective of hydrogen trapping, carbide with a larger surface area is more advantageous and therefore, if the volume fraction is constant, carbide with a smaller grain size is more preferred. Furthermore, coarse carbide causes deterioration of bendability. Thus, the carbide has an average grain size of 200 nm or less. On the other hand, carbide with an average grain size of less than 50 nm may have a lower volume fraction and may not sufficiently have the effects of precipitation strengthening and hydrogen trapping necessary for the present invention.
Thus, in the present invention, at 1/8 to 3/8 of the thickness of the base steel sheet, tempered martensite containing carbide with an average grain size of 50 nm or more and 200 nm or less constitutes 70% or more of the entire martensite.
Here, the average grain size is an average value of a major axis length and a minor axis length when the grain is approximated to an ellipse. The average grain size can be measured, for example, by a method described in Examples.
Integrated amount of hydrogen released when base steel sheet from which coated layer is peeled off is heated from room temperature to 200°C: 0.45 ppm by mass or less

A galvanized steel sheet according to the present invention has high bendability, stretch flangeability, and hydrogen embrittlement resistance because the amount of diffusible hydrogen is reduced by controlling the amount of carbide in martensite within the specified range and thereby effectively trapping hydrogen introduced into the steel during the production process. In the present invention, the integrated amount of hydrogen released when a base steel sheet from which a coated layer (which is a galvanized layer and includes a metal coated layer described later in a case where the metal coated layer is formed) is peeled off is heated from room temperature (15°C to 35°C) to 200°C at 200°C/h is defined as the amount of diffusible hydrogen in the steel.

When the amount of diffusible hydrogen is more than 0.45 ppm by mass, high bendability, stretch flangeability, and hydrogen embrittlement resistance may not be achieved. Thus, the amount of diffusible hydrogen is 0.45 ppm by mass or less, preferably 0.40 ppm by mass or less.

The lower limit may be, but is not limited to, 0 ppm by mass because the amount of diffusible hydrogen is preferably as small as possible.

When a base steel sheet from which a coated layer is peeled off is heated from room temperature to 600°C, the integrated amount of hydrogen released in the temperature range of 350°C to 600°C is 0.05 ppm by mass or more (suitable conditions)

A galvanized steel sheet according to the present invention is designed to reduce the amount of diffusible hydrogen by controlling the amount of carbide in martensite within the specified range and thereby effectively trapping hydrogen introduced into the steel during the production process. Hydrogen trapped in carbide is less likely to be released from the steel than diffusible hydrogen and is not released by heating to 200°C but is released at 350°C or more. To sufficiently achieve the advantages of the present invention, when a steel sheet from which a coated layer (which is a galvanized layer and includes a metal coated layer in a case where the metal coated layer described later is formed) is peeled off is heated from room temperature (15°C to 35°C) to 600°C at 200°C/h, the integrated amount of hydrogen released at 350°C to 600°C is preferably 0.05 ppm by mass or more, more preferably 0.06 ppm by mass or more, still more preferably 0.07 ppm by mass or more.

Although the upper limit is not particularly limited, the integrated amount of hydrogen released at 350°C to 600°C may be 1.00 ppm by mass or less.

As a method for determining the amount of hydrogen in the steel described above, an approximately 5 x 30 mm test specimen for hydrogen analysis is taken from a galvanized steel sheet, the galvanized layer (including a metal coated layer in a case where the metal coated layer is formed) on the surface is removed with a precision grinder, the test specimen is immediately put into a quartz tube whose atmosphere is replaced with Ar gas, the test specimen is heated to 600°C at a heating rate of 200°C/h, and the amount of hydrogen released during heating is measured by gas chromatography. The integrated amount of hydrogen released in the temperature range of room temperature to 200°C is determined as the "amount of diffusible hydrogen", and the integrated amount of hydrogen released in the temperature range of 350°C or more and 600°C or less is determined as the "amount of trapped hydrogen".

The amount of hydrogen is preferably measured after completion of the production of a steel sheet. That is, the amount of diffusible hydrogen is preferably measured after completion of the production of a steel sheet. The amount of trapped hydrogen is preferably measured after completion of the production of a steel sheet.

The amount of diffusible hydrogen and the amount of trapped hydrogen are more preferably measured within 72 hours after a steel sheet reaches room temperatures (40°C or less) for the first time after the reheating step specified in the present invention.

Galvanized Layer

A galvanized steel sheet according to the present invention has a galvanized layer on a base steel sheet, and the galvanized layer may be a galvannealed layer, a hot-dip galvanized layer, or a hot-dip galvannealed layer.

A galvanized steel sheet according to the present invention has a galvanized layer (a second coated layer in a case where a metal coated layer (a first coated layer) is formed) formed as an outermost surface layer on a base steel sheet (on a surface of the base steel sheet or on a surface of a metal coated layer in a case where the metal coated layer is formed), and the galvanized layer may be provided only on one surface of the base steel sheet or may be provided on both surfaces of the base steel sheet.

That is, a galvanized steel sheet according to the present invention may include a base steel sheet, and a second coated layer (a galvanized layer, an aluminum coated layer, or the like) may be formed on the base steel sheet, or may include a base steel sheet, and a metal coated layer (a first coated layer (excluding a second coated layer of a galvanized layer)) and a second coated layer (a galvanized layer, an aluminum coated layer, or the like) may be sequentially formed on the base steel sheet.

The term "galvanized layer", as used herein, refers to a coated layer containing Zn as a main component (Zn content: 50.0% or more), for example, a galvanized layer, such as a hot-dip galvanized layer, or a galvannealed layer, such as a hot-dip galvannealed layer.

Here, the hot-dip galvanized layer (galvanized layer) is preferably composed of, for example, Zn, 20.0% or less by mass of Fe, and 0.001% or more by mass and 1.0% or less by mass of Al. The hot-dip galvanized layer may optionally contain one or two or more elements selected from the group consisting of Pb, Sb, Si, Sn, Mg, Mn, Ni, Cr, Co, Ca, Cu, Li, Ti, Be, Bi, and REM in a total amount of 0.0% or more by mass and 3.5% or less by mass. The Fe content of the hot-dip galvanized layer is more preferably less than 7.0% by mass. The remainder other than the above elements is incidental impurities.

The hot-dip galvannealed layer (galvannealed layer) is preferably composed of, for example, 20% or less by mass of Fe and 0.001% or more by mass and 1.0% or less by mass of Al. The hot-dip galvannealed layer may optionally contain one or two or more elements selected from the group consisting of Pb, Sb, Si, Sn, Mg, Mn, Ni, Cr, Co, Ca, Cu, Li, Ti, Be, Bi, and REM in a total amount of 0.0% or more by mass and 3.5% or less by mass. The Fe content of the hot-dip galvannealed layer is more preferably 7.0% or more by mass, still more preferably 8.0% or more by mass. The Fe content of the hot-dip galvannealed layer is more preferably 15.0% or less by mass, still more preferably 13.0% or less by mass. The remainder other than the above elements is incidental impurities.

Furthermore, the coating weight per side of the galvanized layer is preferably, but not limited to, 20 g/m$^2$ or more. The coating weight per side of the galvanized layer is preferably 80 g/m$^2$ or less.

The coating weight of the galvanized layer is measured as described below.

That is, a treatment liquid is prepared by adding 0.6 g of a corrosion inhibitor for Fe ("Ibit 700BK" (registered trademark) manufactured by Asahi Chemical Co., Ltd.) to 1 L of 10% by mass aqueous hydrochloric acid. A steel sheet as a sample is then immersed in the treatment liquid to dissolve a galvanized layer. The mass loss of the sample due to the dissolution is then measured and is divided by the surface area of a base steel sheet (the surface area of a coated portion) to calculate the coating weight (g/m$^2$).

Chemical Composition

Next, a preferred chemical composition of a steel sheet constituting a galvanized steel sheet (a base steel sheet (hereinafter also referred to simply as a steel sheet)) will be described. Unless otherwise specified, "%" representing the component element content refers to "% by mass".

C: 0.080% or more and 0.300% or less

C improves hardenability and facilitates the formation of martensite or bainite. C can also precipitate as fine carbide in the microstructure and thereby trap hydrogen in the steel, reduce the amount of diffusible hydrogen, and improve the hydrogen embrittlement resistance. When the C content is less than 0.080%, both required strength and bendability cannot be achieved. Thus, the C content is preferably 0.080% or more, more preferably 0.100% or more.

On the other hand, a C content of more than 0.300% may result in a saturated hydrogen trapping effect of fine carbide and martensite with excessively increased strength, which may impair ductility. Thus, the C content is preferably 0.300% or less, more preferably 0.250% or less.

Si: 0.20% or more and 2.00% or less

Si is an element effective in strengthening ferrite, which has high ductility, and suppresses the formation of coarse carbide when a steel sheet after annealing is held in a relatively low temperature region, thereby promoting the formation of retained austenite and contributing to an improvement in the balance between strength and ductility. This effect is not sufficiently produced at a Si content of less than 0.20%. Thus, the Si content is 0.20% or more, preferably 0.30% or more.

On the other hand, when the Si content is more than 2.00%, the action of forming carbide becomes excessive, fine carbide in martensite necessary for the present invention cannot be formed, diffusible hydrogen in the steel increases, and consequently the desired yield ratio or hydrogen embrittlement resistance of the present invention may not be achieved. Thus, the Si content is preferably 2.00% or less, more preferably 1.50% or less.

Mn: 1.00% or more and 4.00% or less

Mn improves the hardenability of steel and facilitates the formation of martensite or bainite. When the Mn content is less than 1.00%, the area fraction of ferrite may become excessive, and required strength and yield ratio may not be achieved. Thus, the Mn content is preferably 1.00% or more, more preferably 1.50% or more.

On the other hand, when the Mn content is more than 4.00%, the strength of martensite may increase excessively, and the formation of coarse MnS may be promoted, so that high bendability may not be achieved. Thus, the Mn content is preferably 4.00% or less, more preferably 3.50% or less.

P: 0.10% or less

An excessively large amount of P segregates at a prior-austenite grain boundary and embrittles the grain boundary, causing deterioration of bendability. Thus, the P content is preferably 0.10% or less, more preferably 0.05% or less. The P content is preferably 0.03% or less, preferably 0.02% or less.

Although the lower limit is not particularly limited, P is also an element effective in increasing the strength of a steel sheet by solid-solution strengthening, and the P content is preferably 0.001% or more to produce such an effect. The P content may be 0.002% or more or 0.005% or more.

S: 0.0200% or less

S forms an inclusion, such as MnS, and causes deterioration of bendability. Thus, the S content is preferably 0.0200% or less, more preferably 0.0100% or less.

Although the lower limit is not particularly limited, the S content may be 0.0001% or more due to constraints on production technology. The S content may be 0.0002% or more or 0.0004% or more.

Al: 0.003% or more and 0.100% or less

Al is used as a deoxidizing agent and also contributes to solid-solution strengthening of steel. These effects may not be produced at an Al content of less than 0.003%. Thus, the Al content is preferably 0.003% or more. The Al content is preferably 0.005% or more, preferably 0.007% or more.

On the other hand, an Al content of more than 0.100% results in deterioration of slab quality during steelmaking. Thus, the Al content is preferably 0.100% or less, more preferably 0.050% or less.

N: 0.0100% or less

N may form coarse nitride, act as a starting point of void formation, and reduce bendability. A N content of 0.0100% or less can prevent N from forming coarse nitride. Thus, the N content is preferably 0.0100% or less, more preferably 0.0060% or less.

Although the lower limit is not particularly limited, the N content may be 0.0005% or more due to constraints on production technology.

The remainder other than the above is composed of Fe and incidental impurities. A steel sheet according to the present invention preferably has a chemical composition containing the above components, with the remainder being Fe and incidental impurities.

The chemical composition may further optionally contain a predetermined amount of at least one selected from the following element group. When the following optional elements are contained in an amount less than an appropriate lower limit, the optional elements may be contained as incidental impurities.

B: 0.0100% or less

B is an element effective in improving the hardenability of steel. To improve the hardenability, the B content is preferably 0.0001% or more, more preferably 0.0002% or more, still more preferably 0.0003% or more. The B content is preferably 0.0005% or more, preferably 0.0007% or more.

To achieve higher formability, if B is contained, the B content is preferably 0.0100% or less, more preferably 0.0050% or less, still more preferably 0.0030% or less.

Ti: 0.200% or less

Ti precipitates fine carbide and contributes to an increase in strength and a hydrogen trapping effect. The lower limit of the Ti content is not particularly limited and, to produce these effects, is preferably 0.001% or more, more preferably 0.005% or more, still more preferably 0.010% or more.

On the other hand, an excessively high Ti content may result in coarse carbide and deterioration of bendability. Thus, if Ti is contained, the Ti content is preferably 0.200% or less, more preferably 0.100% or less, still more preferably 0.060% or less.

Nb: 0.200% or less

Nb precipitates fine carbide and contributes to an increase in strength and a hydrogen trapping effect. The lower limit of the Nb content is not particularly limited and, to produce these effects, is preferably 0.001% or more, more preferably 0.005% or more, still more preferably 0.010% or more.

On the other hand, an excessively high Nb content may result in coarse carbide and deterioration of bendability. Thus, if Nb is contained, the Nb content is preferably 0.200% or less, more preferably 0.100% or less, still more preferably 0.060% or less.

Sb: 0.200% or less

Sb is an element effective in suppressing excessive decarburization of a steel sheet surface and preventing a decrease in the amount of martensite formed.

To produce such an effect, the Sb content is preferably 0.001% or more, more preferably 0.002% or more, still more preferably 0.005% or more.

On the other hand, to achieve higher toughness, if Sb is contained, the Sb content is preferably 0.200% or less. The Sb content is more preferably 0.060% or less, still more preferably 0.020% or less.

Sn: 0.200% or less

Sn is an element effective in suppressing decarburization, denitrification, or the like and thereby reducing a decrease in the strength of steel. To produce such an effect, the Sn content is preferably 0.001% or more, more preferably 0.002% or more, still more preferably 0.005% or more.

On the other hand, to achieve higher impact resistance, if Sn is contained, the Sn content is preferably 0.200% or less. The Sn content is more preferably 0.060% or less, still more preferably 0.020% or less.

V: 0.100% or less

V precipitates fine carbide and contributes to an increase in strength and a hydrogen trapping effect. The lower limit of the V content is not particularly limited and, to produce these effects, is preferably 0.001% or more, more preferably 0.002% or more, still more preferably 0.005% or more. The V content is preferably 0.007% or more, preferably 0.009% or more.

On the other hand, an excessively high V content may result in coarse carbide and deterioration of bendability. Thus, if V is contained, the V content is preferably 0.100% or less, more preferably 0.080% or less, still more preferably 0.060% or less.

Cu: 2.00% or less

Cu is an element that increases the hardenability and is an element effective in setting the area fraction of the hard phase within a more suitable range. To produce this effect, the Cu content is preferably 0.005% or more, more preferably 0.010% or more, still more preferably 0.020% or more. The Cu content is preferably 0.040% or more, preferably 0.060% or more.

Furthermore, if Cu is contained, from the perspective of preventing an increase in cost, the Cu content is preferably 2.00% or less, more preferably 1.00% or less, still more preferably 0.50% or less.

Cr: 2.00% or less

The addition of Cr can improve the hardenability and the balance between the strength and the ductility. To produce this effect, the Cr content is preferably 0.001% or more, more preferably 0.002% or more, still more preferably 0.005% or more. The Cr content is preferably 0.007% or more, preferably 0.009% or more.

If Cr is contained, from the perspective of preventing an increase in cost, the Cr content is preferably 2.00% or less, more preferably 1.00% or less, still more preferably 0.80% or less.

Ni: 2.00% or less

The addition of Ni can improve the hardenability and the balance between the strength and the ductility. To produce this effect, the Ni content is preferably 0.005% or more, more preferably 0.010% or more, still more preferably 0.020% or more. The Ni content is preferably 0.030% or more, preferably 0.040% or more.

If Ni is contained, from the perspective of preventing an increase in cost, the Ni content is preferably 2.00% or less, more preferably 1.00% or less, still more preferably 0.80% or less. The Ni content is preferably 0.60% or less, preferably 0.40% or less.

Mo: 1.00% or less

The addition of Mo can have a strength adjustment effect. To produce this effect, the Mo content is preferably 0.005% or more, more preferably 0.01% or more, still more preferably 0.02% or more. The Mo content is preferably 0.03% or more, preferably 0.04% or more.

If Mo is contained, from the perspective of preventing an increase in cost, the Mo content is preferably 1.00% or less, more preferably 0.80% or less, still more preferably 0.60% or less. The Mo content is preferably 0.50% or less, preferably 0.40% or less.

Ta: 0.100% or less

The addition of Ta can have the effect of improving the strength. To produce this effect, the Ta content is preferably 0.001% or more, more preferably 0.002% or more, still more preferably 0.003% or more.

If Ta is contained, from the perspective of preventing an increase in cost, the Ta content is preferably 0.100% or less. The Ta content is more preferably 0.050% or less, still more preferably 0.020% or less. The Ta content is preferably 0.010% or less, preferably 0.008% or less.

W: 0.500% or less

The addition of W can have the effect of improving the strength. To produce this effect, the W content is preferably 0.001% or more, more preferably 0.002% or more, still more preferably 0.003% or more. The W content is preferably 0.005% or more, preferably 0.007% or more.

If W is contained, from the perspective of preventing an increase in cost, the W content is preferably 0.500% or less, more preferably 0.450% or less, still more preferably 0.400% or less. The W content is preferably 0.350% or less, preferably 0.300% or less.

Zr: 0.020% or less

The addition of Zr can have the effect of improving the ultimate deformability and the stretch flangeability of a steel sheet. To produce this effect, the Zr content is preferably 0.0005% or more, more preferably 0.0010% or more, still more preferably 0.0015% or more.

If Zr is contained, from the perspective of preventing an increase in cost, the Zr content is preferably 0.020% or less. The Zr content is more preferably 0.010% or less, still more preferably 0.0050% or less.

Ca: 0.0200% or less

When Ca is contained, the form of sulfide can be controlled, and the ductility and toughness can be further improved. To achieve higher ductility, if Ca is contained, the Ca content is preferably 0.0200% or less. The Ca content is more preferably 0.0100% or less, still more preferably 0.0050% or less. The Ca content is preferably 0.0040% or less, preferably 0.0030% or less.

Although the lower limit of the Ca content may be, but is not limited to, 0.0000%, the Ca content is preferably 0.0001% or more due to constraints on production technology. Furthermore, from the perspective of controlling the form of sulfide and further improving the ductility and toughness, the Ca content is more preferably 0.0005% or more.

Mg: 0.0200% or less

0.0001% or more of Mg can control the form of sulfide and improve the ductility and toughness. It is more preferably 0.0005% or more, still more preferably 0.001% or more.

To achieve higher ductility, if Mg is contained, the Mg content is preferably 0.0200% or less. The Mg content is more preferably 0.0100% or less, still more preferably 0.0050% or less.

Zn: 0.020% or less

The addition of Zn can have the effect of improving the ultimate deformability and the stretch flangeability of a steel sheet. To produce this effect, the Zn content is preferably 0.001% or more, more preferably 0.002% or more, still more preferably 0.003% or more.

If Zn is contained, from the perspective of preventing an increase in cost, the Zn content is preferably 0.020% or less. The Zn content is more preferably 0.010% or less, still more preferably 0.008% or less.

Co: 0.020% or less

The addition of Co can have the effect of improving the ultimate deformability and the stretch flangeability of a steel sheet. To produce this effect, the Co content is preferably 0.001% or more, more preferably 0.002% or more, still more preferably 0.003% or more.

If Co is contained, from the perspective of preventing an increase in cost, the Co content is preferably 0.020% or less. The Co content is more preferably 0.010% or less, still more preferably 0.008% or less.

Ce, Se, Te, Ge, As, Sr, Cs, Hf, Pb, Bi, or REM (excluding Ce) content: 0.0200% or less

The addition of these elements can have the effect of improving the ultimate deformability and the stretch flangeability of a steel sheet. To produce this effect, at least one of these elements is contained in an amount of 0.0001% or more.

On the other hand, from the perspective of preventing an increase in cost, if at least one of these elements is contained, each element content is preferably 0.0200% or less.

Ce is more preferably 0.0002% or more, still more preferably 0.0005% or more. Furthermore, Ce is more preferably 0.0150% or less, still more preferably 0.0100% or less. Ce is preferably 0.0080% or less, more preferably 0.0060% or less.

Se is more preferably 0.0002% or more, still more preferably 0.0005% or more. Se is preferably 0.0007% or more, more preferably 0.0009% or more. Se is more preferably 0.0150% or less, still more preferably 0.0100% or less. Se is preferably 0.0080% or less, more preferably 0.0060% or less.

Te is more preferably 0.0002% or more, still more preferably 0.0005% or more. Te is preferably 0.0007% or more, more preferably 0.0009% or more. Te is more preferably 0.0150% or less, still more preferably 0.0100% or less.

Ge is more preferably 0.0002% or more, still more preferably 0.0005% or more. Ge is preferably 0.0007% or more, more preferably 0.0009% or more. Ge is more preferably 0.0150% or less, still more preferably 0.0100% or less.

As is more preferably 0.0002% or more, still more preferably 0.0005% or more. As is preferably 0.0007% or more, more preferably 0.0009% or more. As is more preferably 0.0150% or less, still more preferably 0.0100% or less.

Sr is more preferably 0.0002% or more, still more preferably 0.0005% or more. Sr is preferably 0.0007% or more, more preferably 0.0009% or more. Sr is more preferably 0.0150% or less, still more preferably 0.0100% or less.

Cs is more preferably 0.0002% or more, still more preferably 0.0005% or more. Cs is preferably 0.0007% or more, more preferably 0.0009% or more. Cs is more preferably 0.0150% or less, still more preferably 0.0100% or less.

Hf is more preferably 0.0002% or more, still more preferably 0.0005% or more. Hf is preferably 0.0007% or more, more preferably 0.0009% or more. Hf is more preferably 0.0150% or less, still more preferably 0.0100% or less.

Pb is more preferably 0.0002% or more, still more preferably 0.0005% or more. Pb is preferably 0.0007% or more, more preferably 0.0009% or more. Pb is more preferably 0.0150% or less, still more preferably 0.0100% or less. Pb is preferably 0.0080% or less, more preferably 0.0060% or less.

Bi is more preferably 0.0002% or more, still more preferably 0.0005% or more. Bi is preferably 0.0007% or more, more preferably 0.0009% or more. Bi is more preferably 0.0150% or less, still more preferably 0.0100% or less. Bi is preferably 0.0080% or less, more preferably 0.0060% or less.

REM is more preferably 0.0002% or more, still more preferably 0.0005% or more. REM is preferably 0.0007% or more, more preferably 0.0009% or more. REM is more preferably 0.0150% or less, still more preferably 0.0100% or less. The REM specified in the present invention excludes Ce described above.

The term "REM", as used herein, refers to scandium (Sc) with an atomic number of 21, yttrium (Y) with an atomic number of 39, and lanthanoids from lanthanum (La) with an atomic number of 57 to lutetium (Lu) with an atomic number of 71. The term "REM concentration", as used herein, refers to the total content of one or two or more elements selected from the REM.

The REM is preferably, but not limited to, Sc, Y, or La.

Surface Soft Layer

A base steel sheet of a galvanized steel sheet according to an embodiment of the present invention preferably has a surface soft layer on a surface layer. The surface soft layer contributes to the suppression of the growth of a bending crack during press forming and in case of a collision of an automotive body and further improves bending fracture resistance. The surface soft layer refers to a decarburized layer and is a surface layer region with a Vickers hardness of 85% or less with respect to the Vickers hardness of a cross section (a surface parallel to the steel sheet surface) at a quarter thickness position.

The surface soft layer is formed with a thickness of 200 μm or less from the surface of the base steel sheet in the thickness direction. The region where the surface soft layer is formed is preferably 150 μm or less, more preferably 120 μm

or less, from the surface of the base steel sheet in the thickness direction. The lower limit of the thickness of the surface soft layer is preferably, but not limited to, 7 $\mu$m or more, more preferably 14 $\mu$m or more, still more preferably 17 $\mu$m or more. The surface soft layer is preferably 30 $\mu$m or more, more preferably 40 $\mu$m or more.

The quarter thickness position of the base steel sheet at which the Vickers hardness is measured is a non-surface soft layer (a layer that does not satisfy the condition of the hardness of a surface soft layer defined in the present invention).

The Vickers hardness is measured under a load of 10 gf in accordance with JIS Z 2244-1 (2020).

Nanohardness of Surface Soft Layer

In a galvanized steel sheet according to the present invention, when the nanohardness is measured at 300 or more points in a 50 $\mu$m x 50 $\mu$m region of a sheet surface at each of a quarter depth position and a half depth position of a surface soft layer from a surface of a base steel sheet in the thickness direction, preferably, the ratio of the number of measurements in which the nanohardness of the sheet surface at the quarter depth position of the surface soft layer from the surface of the base steel sheet in the thickness direction is 7.0 GPa or more to the total number of measurements is 0.10 or less, the nanohardness of the sheet surface at the quarter depth position of the surface soft layer from the surface of the base steel sheet in the thickness direction has a standard deviation $\sigma$ of 1.8 GPa or less, and the nanohardness of the sheet surface at the half depth position of the surface soft layer from the surface of the base steel sheet in the thickness direction has a standard deviation $\sigma$ of 2.2 GPa or less.

When the ratio of the number of measurements with a nanohardness of 7.0 GPa or more to the total number of measurements is 0.10 or less, it means that the ratio of a hard microstructure (martensite or the like), an inclusion, or the like is small, and it is possible to further suppress the formation and connection of voids and crack growth in the hard microstructure (martensite or the like), an inclusion, or the like during press forming and in case of a collision and to achieve good R/t and SFmax.

Furthermore, to achieve high bendability during press forming and good bending fracture characteristics in case of a collision, preferably, the nanohardness of the sheet surface at the quarter depth position of the surface soft layer from the surface of the base steel sheet in the thickness direction has a standard deviation $\sigma$ of 1.8 GPa or less, and the nanohardness of the sheet surface at the half depth position of the surface soft layer from the surface of the base steel sheet in the thickness direction has a standard deviation $\sigma$ of 2.2 GPa or less.

When the nanohardness of the sheet surface at the quarter depth position of the surface soft layer from the surface of the base steel sheet in the thickness direction has a standard deviation $\sigma$ of 1.8 GPa or less, and the nanohardness of the sheet surface at the half depth position of the surface soft layer from the surface of the base steel sheet in the thickness direction has a standard deviation $\sigma$ of 2.2 GPa or less, it means a small difference in the microstructure hardness in the micro region, and due to the small difference in the microstructure hardness in the micro region, it is possible to further suppress the formation and connection of voids and crack growth during press forming and in case of a collision and achieve good R/t and SFmax.

Furthermore, a preferred range of the standard deviation $\sigma$ of the nanohardness of the sheet surface at the quarter depth position of the surface soft layer from the surface of the base steel sheet in the thickness direction is 1.7 GPa or less. The standard deviation $\sigma$ of the nanohardness of the sheet surface at the quarter depth position of the surface soft layer from the surface of the base steel sheet in the thickness direction is more preferably 1.3 GPa or less. Although the lower limit is not particularly limited, the standard deviation $\sigma$ of the nanohardness of the sheet surface at the quarter depth position of the surface soft layer from the surface of the base steel sheet in the thickness direction may be 0.5 GPa or more.

A preferred range of the standard deviation $\sigma$ of the nanohardness of the sheet surface at the half depth position of the surface soft layer from the surface of the base steel sheet in the thickness direction is 2.1 GPa or less. The standard deviation $\sigma$ of the nanohardness of the sheet surface at the half depth position of the surface soft layer from the surface of the base steel sheet in the thickness direction is more preferably 1.7 GPa or less. Although the lower limit is not particularly limited, the standard deviation $\sigma$ of the nanohardness of the sheet surface at the half depth position of the surface soft layer from the surface of the base steel sheet in the thickness direction may be 0.6 GPa or more.

The phrases "the nanohardness of a sheet surface at a quarter position in the thickness direction" and "the nanohardness of a sheet surface at a half position in the thickness direction", as used herein, refer to the hardness measured by the following method.

First, for a steel sheet on which a metal coated layer, such as a metal electroplated layer, is further formed after a galvanized layer is peeled off, peeling of the metal coated layer is followed by mechanical polishing to the quarter depth position of the surface soft layer from the surface of the base steel sheet in the thickness direction, by buffing with diamond and alumina, and by colloidal silica polishing. The nanohardness was measured at 512 points in total with Hysitron tribo-950 and a Berkovich diamond indenter under the conditions of a load of 500 $\mu$N, a measurement region of 50 $\mu$m x 50 $\mu$m, and a dot spacing of 2 $\mu$m.

Furthermore, mechanical polishing is performed to the half depth position of the surface soft layer in the thickness direction, buffing with diamond and alumina is performed, and colloidal silica polishing is further performed. The nanohardness is then measured using Hysitron tribo-950 with a Berkovich diamond indenter under the conditions of a load of 500 μN, a measurement region of 50 μm x 50 μm, and a dot spacing of 2 μm.

The nanohardness is measured at 300 or more points at the quarter depth position in the thickness direction and is also measured at 300 or more points at the half depth position in the thickness direction.

For example, when the surface soft layer has a thickness of 100 μm, the quarter position is a position 25 μm from the surface of the surface soft layer, and the half position is a position 50 μm from the surface of the surface soft layer. The nanohardness is measured at 300 or more points at the position of 25 μm and is also measured at 300 or more points at the position of 50 μm.

Metal Coated Layer

Furthermore, a galvanized steel sheet according to an embodiment of the present invention preferably has a metal coated layer (a first coated layer, a pre-coated layer) formed between a base steel sheet and a galvanized layer on one or both surfaces of the base steel sheet (note that the metal coated layer excludes a galvanized layer of a hot-dip galvanized layer or a hot-dip galvannealed layer). The metal coated layer is preferably a metal electroplated layer, and the metal electroplated layer will be described below as an example.

When the metal electroplated layer is formed on the base steel sheet, the metal electroplated layer of the outermost surface layer contributes to the suppression of bending crack initiation during press forming and in case of a collision of an automotive body and therefore further improves the bending fracture resistance.

In the present invention, the dew point in a soaking step can be -5°C or more to further increase the thickness of a soft layer and significantly improve axial crushing characteristics. In this regard, in the present invention, due to the metal coated layer, even when the dew point is less than -5°C and the soft layer has a small thickness, axial crushing characteristics equivalent to those in the case where the soft layer has a large thickness can be achieved.

The metal species of the metal electroplated layer may be any of Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi, preferably Fe. Although an Fe-based electroplated layer will be described below as an example, the following conditions for Fe can be similarly adopted for another metal species.

The coating weight of the Fe-based electroplated layer is more than $0 \text{ g/m}^2$, preferably $2.0 \text{ g/m}^2$ or more. Although the upper limit of the coating weight of the Fe-based electroplated layer per side of the base steel sheet is not particularly limited, from the perspective of cost, the coating weight of the Fe-based electroplated layer per side is preferably $60 \text{ g/m}^2$ or less. The coating weight of the Fe-based electroplated layer is preferably $50 \text{ g/m}^2$ or less, more preferably $40 \text{ g/m}^2$ or less, still more preferably $30 \text{ g/m}^2$ or less.

The coating weight of the Fe-based electroplated layer is measured as described below. A sample with a size of 10 x 15 mm is taken from an Fe-based electroplated steel sheet and is embedded in a resin to prepare a cross-section embedded sample. Three arbitrary portions on the cross section are observed with a scanning electron microscope (SEM) at an acceleration voltage of 15 kV and at a magnification of 2,000 to 10,000 times depending on the thickness of the Fe-based electroplated layer, and the average thickness of the three visual fields is multiplied by the density of iron to convert it into the coating weight per side of the Fe-based electroplated layer.

The Fe-based electroplated layer may be pure Fe or an alloy plated layer of an Fe-B alloy, an Fe-C alloy, an Fe-P alloy, an Fe-N alloy, an Fe-O alloy, an Fe-Ni alloy, an Fe-Mn alloy, an Fe-Mo alloy, an Fe-W alloy, or the like. The chemical composition of the Fe-based electroplated layer is preferably, but not limited to, a chemical composition containing one or two or more elements selected from the group consisting of B, C, P, N, O, Ni, Mn, Mo, Zn, W, Pb, Sn, Cr, V, and Co in a total amount of 10% or less by mass, with the remainder being Fe and incidental impurities. By setting the total amount of elements other than Fe to 10% or less by mass, it is possible to prevent a decrease in electrolysis efficiency and form an Fe-based electroplated layer at low cost. For an Fe-C alloy, the C content is preferably 0.08% or less by mass.

<Method for Manufacturing Galvanized Steel Sheet>

Next, a method for manufacturing a galvanized steel sheet according to an embodiment of the present disclosure will be described. Unless otherwise specified, the temperature at which a steel slab (steel material), a steel sheet, or the like described below is heated or cooled refers to the surface temperature of the steel slab (steel material), the steel sheet, or the like.

A method for manufacturing a galvanized steel sheet according to the present invention includes: a hot rolling step of heating a slab with the above-described chemical composition to the temperature range of 1100°C to 1350°C, hot-rolling the slab at a finish rolling delivery temperature of 800°C to 950°C, and coiling the hot-rolled slab at a coiling temperature of 650°C or less; a reduction step of holding a steel sheet after the hot rolling step at 700°C or more for 20 seconds or more in a reducing atmosphere with a hydrogen concentration of 8% or more by volume and 30% or less by volume; a soaking step of holding the steel sheet after the reduction step at 750°C or more for 20 seconds or more and 300 seconds or less in a soaking atmosphere with a hydrogen concentration of 0.2% or more by volume and 8% or less by volume; a first cooling step of cooling the steel sheet after the soaking step; a galvanization step of forming a galvanized layer on a surface of the steel sheet after the first cooling step; a second cooling step of cooling the steel sheet after the galvanization step to a cooling stop temperature of 100°C to 300°C at an average cooling rate of 20°C/s or less from a temperature range of 350°C to 450°C down to (Ms temperature - 100°C) while the steel sheet is retained in a temperature range of 100°C to 350°C for 5 seconds or more; and a reheating step of holding the steel sheet after the second cooling step in a temperature range of the cooling stop temperature or higher and 450°C or less for 5 to 600 seconds.

[Hot Rolling Step]

The slab is hot-rolled under the following conditions.

Slab heating temperature: 1100°C to 1350°C

To dissolve carbide and reduce rolling force, the slab heating temperature is 1100°C or more. The slab heating temperature is preferably 1150°C or more. To prevent an increase in scale loss, the slab heating temperature is 1350°C or less, preferably 1300°C or less.

Finish rolling delivery temperature: 800°C to 950°C

When the finish rolling delivery temperature is less than 800°C, ferrite transformation may occur at the time of rolling, and extended ferrite may be formed in the surface layer of the hot-rolled sheet and remain even in the next and subsequent steps, which may impair the final bendability. Thus, the finish rolling delivery temperature is 800°C or more, preferably 850°C or more. On the other hand, a finish rolling delivery temperature of more than 950°C may result in a coarse crystal grain and insufficient strength or deterioration of bendability. Thus, the finish rolling delivery temperature is 950°C or less, preferably 930°C or less.

Coiling temperature: 650°C or less

When the coiling temperature is more than 650°C, carbide in a hot-rolled steel sheet may become coarsened and may not be completely dissolved before the soaking step, which may cause deterioration of bendability. Thus, the coiling temperature is 650°C or less, preferably 600°C or less. The lower limit of the coiling temperature is preferably, but not limited to, 400°C or more from the perspective of suppressing the occurrence of a shape defect in a steel sheet and preventing the steel sheet from becoming excessively hard.

[Cold Rolling Step (Suitable Conditions)]

Before a base steel sheet after the hot rolling step (hot rolling process) is subjected to the reduction step, cold rolling may be performed as necessary. The cold rolling in the cold rolling step is performed before an oxidation step in the case of performing an oxidation treatment in the oxidation step described later, and is performed before a pre-coating step in the case of performing metal coating in the pre-coating step. In the case of performing cold rolling, a hot-rolled steel sheet formed after the hot rolling step (hot rolling process) is preferably cold-rolled after being subjected to a preliminary treatment, such as pickling or degreasing, by a known method.

Rolling reduction of 20% or more

In the case of performing cold rolling, the rolling reduction (cumulative rolling reduction ratio) is preferably, but not limited to, 20% or more, more preferably 30% or more, to promote recrystallization of ferrite. The rolling reduction may have any upper limit and is preferably 80% or less.

[Pre-coating (Metal Coating, Metal Electroplating, First Coating) Step (Suitable Conditions)]

In an embodiment of the present invention, a pre-coating (metal coating) treatment may be performed on a base steel sheet after the hot rolling step (after the cold rolling step in a case where cold rolling is performed) and before the reduction step to manufacture a metal coated steel sheet before annealing (a metal electroplated steel sheet before annealing) in which a metal coated layer, such as a metal electroplated layer, is formed on one or both surfaces of the base steel sheet. The term "metal coating", as used herein, excludes galvanization (second coating).
The metal coating treatment method is not particularly limited, but as described above, the metal coated layer formed on the base steel sheet is preferably a metal electroplated layer, and thus a metal electroplating treatment is preferably performed.

For example, in the case of adopting an Fe-based electroplating bath, a sulfuric acid bath, a hydrochloric acid bath, or a mixture of both can be applied. Furthermore, the coating weight of a metal electroplated layer before annealing can be adjusted by the energization time or the like. The term "metal electroplated steel sheet before annealing" means that a metal electroplated layer is not subjected to the oxidation step, the reduction step, or the soaking step, and does not exclude an embodiment in which a hot-rolled steel sheet or a cold-rolled steel sheet before a metal electroplating treatment is annealed in advance.

The metal species of the electroplated layer may be any of Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi, preferably Fe. Although Fe-based electroplating will be described below as an example, the following conditions for the Fe-based electroplating can be similarly adopted for other metal-based electroplating.

The Fe ion content of an Fe-based electroplating bath before the start of energization is preferably 0.5 mol/L or more in terms of $Fe^{2+}$. When the Fe ion content of the Fe-based electroplating bath is 0.5 mol/L or more in terms of $Fe^{2+}$, a sufficient Fe coating weight can be achieved. To achieve a sufficient Fe coating weight, the Fe ion content of the Fe-based electroplating bath before energization is preferably 2.0 mol/L or less.

The Fe-based electroplating bath may contain an Fe ion and at least one element selected from the group consisting of B, C, P, N, O, Ni, Mn, Mo, Zn, W, Pb, Sn, Cr, V, and Co. The total content of these elements in the Fe-based electroplating bath is preferably set such that the total content of these elements in the Fe-based electroplated layer before annealing is 10% or less by mass. A metal element may be contained as a metal ion, and a non-metal element can be contained as part of boric acid, phosphoric acid, nitric acid, an organic acid, or the like. An iron sulfate plating solution may contain a conduction aid, such as sodium sulfate or potassium sulfate, a chelating agent, or a pH buffer.

Other conditions for the Fe-based electroplating bath are also not particularly limited. The temperature of the Fe-based electroplating solution is preferably 30°C or more in consideration of the constant temperature retention ability. The temperature of the Fe-based electroplating solution is preferably 85°C or less. The pH of the Fe-based electroplating bath is also not particularly specified, but is preferably 1.0 or more from the perspective of preventing a decrease in current efficiency due to hydrogen generation, and is preferably 3.0 or less in consideration of the electrical conductivity of the Fe-based electroplating bath. The current density is preferably 10 A/dm$^2$ or more from the perspective of productivity and is preferably 150 A/dm$^2$ or less from the perspective of facilitating the control of the coating weight of the Fe-based electroplated layer. The line speed is preferably 5 mpm or more from the perspective of productivity and is preferably 150 mpm or less from the perspective of stably controlling the coating weight.

As a treatment before the Fe-based electroplating treatment, a degreasing treatment and washing with water for cleaning a steel sheet surface, and also a pickling treatment and washing with water for activating a steel sheet surface can be performed. These pretreatments are followed by the Fe-based electroplating treatment. The methods of the degreasing treatment and washing with water are not particularly limited, and usual methods can be used. In the pickling treatment, various acids, such as sulfuric acid, hydrochloric acid, nitric acid, and a mixture thereof, can be used. Among these, sulfuric acid, hydrochloric acid, or a mixture thereof is preferred. The acid concentration is preferably, but not limited to, in the range of 1% to 20% by mass in consideration of the capability of removing an oxide film, prevention of a rough surface (surface defect) due to overpickling, and the like. The pickling treatment liquid may contain an antifoaming agent, a pickling accelerator, a pickling inhibitor, and the like.

[Oxidation Step (Suitable Conditions)]

A steel sheet after the hot rolling step or a steel sheet after the cold rolling step in the case of performing a cold rolling treatment may be subjected to an oxidation treatment in an oxidation step before the reduction step described later. The oxidation treatment in the oxidation step can form an iron oxide layer on the steel sheet surface, form a reduced iron layer during the subsequent annealing in a reducing atmosphere, and improve the wettability of the steel sheet.

Oxygen concentration: 1000 ppm by volume or more and 30000 ppm by volume or less

In a case where the oxidation treatment is performed in the oxidation step, when the oxygen concentration of the atmosphere is less than 1000 ppm by volume, the formation of an iron oxide layer may not be promoted, and the effect of improving the wettability may be small. Thus, the oxygen concentration is 1000 ppm by volume or more, preferably 1500 ppm by volume or more.

On the other hand, when the oxygen concentration is more than 30000 ppm by volume, iron oxide may be excessively formed, the reduction may not be completed before the galvanization step, such as immersion in hot-dip galvanizing, and the coating wettability may rather deteriorate due to the remaining iron oxide. Thus, the oxygen concentration is 30000 ppm by volume or less, preferably 25000 ppm by volume or less. The oxygen concentration is preferably 22000 ppm by volume or less, more preferably 20000 ppm by volume or less.

Steel sheet temperature (highest temperature reached in oxidation treatment): 600°C or more

In a case where the oxidation treatment is performed in the oxidation step, even in the above-described atmosphere, a steel sheet temperature (the highest temperature reached in the oxidation treatment) of less than 600°C may result in a small amount of iron oxide formed on the surface and a smaller effect of improving the coating wettability. Thus, the steel sheet temperature in the oxidation step (the highest temperature reached in the oxidation treatment) is 600°C or more, preferably 620°C or more. The upper limit of the steel sheet temperature is preferably, but not limited to, 900°C or less, more preferably 880°C or less, to more suitably prevent unreduced iron oxide from remaining in the subsequent reduction step due to excessive oxidation of the steel sheet and to more consistently achieve high coatability. The steel sheet temperature in the oxidation step (the highest temperature reached in the oxidation treatment) is preferably 860°C or less, more preferably 840°C or less.

[Reduction Step]

A natural oxide film on the steel sheet surface or an iron oxide layer on the surface formed when the oxidation treatment is performed in the oxidation step is heated in an iron reducing atmosphere to form a reduced iron layer. In the subsequent soaking step, the atmosphere has a relatively low hydrogen concentration, so that the iron reduction reaction rate decreases. Thus, it is necessary to complete the reduction of iron oxide in the reduction step.

Steel sheet temperature (highest temperature reached in reduction treatment): 700°C or more

A steel sheet temperature (the highest temperature reached in a reduction treatment) of less than 700°C may result in a low reduction rate and remaining unreduced iron oxide. Thus, the steel sheet temperature in the reduction step is 700°C or more, preferably 750°C or more. The upper limit of the steel sheet temperature is preferably, but not limited to, 950°C or less from the perspective of reducing the load on the furnace body. The steel sheet temperature in the reduction step is preferably 920°C or less, more preferably 900°C or less.

Holding time (holding time in reduction treatment): 20 seconds or more

A holding time in the reduction step (a holding time in the reduction treatment) of less than 20 seconds may result in incomplete reduction of iron oxide. Thus, the holding time in the reduction step is 20 seconds or more, preferably 25 seconds or more.
The upper limit of the holding time is preferably, but not limited to, 150 seconds or less from the perspective of productivity. The holding time is preferably 120 seconds or less, more preferably 100 seconds or less.

Hydrogen concentration (hydrogen concentration in reduction treatment): 8% or more by volume and 30% or less by volume

A hydrogen concentration in the atmosphere in the reduction step (the hydrogen concentration in the reduction treatment) of less than 8% by volume may result in remaining unreduced iron oxide. Thus, the hydrogen concentration in the reduction step is 8% or more by volume, preferably 10% or more by volume.
On the other hand, when the hydrogen concentration is more than 30% by volume, the reduction rate may be saturated, and hydrogen introduced into the steel may increase excessively, so that it may be difficult to sufficiently reduce the amount of hydrogen in the steel in the subsequent soaking step. Thus, the hydrogen concentration in the reduction step is 30% or less by volume, preferably 28% or less by volume. The hydrogen concentration is preferably 26% or less by volume, more preferably 24% or less by volume.
The dew point of the atmosphere in the reduction step (the dew point in the reduction treatment) is preferably, but not limited to, 30°C or less, more preferably 25°C or less, to suitably prevent oxidation of the surface of the base steel sheet or the surface of the Fe-based electroplated layer and to improve the adhesiveness of coating when a hot-dip galvanized layer is provided. The dew point in the reduction treatment is preferably 22°C or less, more preferably 20°C or less.
Furthermore, the lower limit of the dew point is preferably, but not limited to, -50°C or more, more preferably -45°C or more, from the perspective of industrial controllability. The dew point in the reduction treatment is preferably -40°C or more, more preferably -35°C or more.

[Soaking Step]

In the soaking step, annealing is performed to form the microstructure of a galvanized steel sheet according to the present invention, and the amount of hydrogen introduced into the steel in the reduction step is reduced.

Steel sheet temperature (annealing temperature): 750°C or more

A steel sheet temperature in the soaking step (annealing temperature) of less than 750°C may result in reoxidation of the steel sheet surface. Furthermore, unrecrystallized ferrite may remain, or austenite may be insufficiently formed during annealing, so that the microstructure required for a steel sheet according to the present invention may not be formed. Thus, the steel sheet temperature is 750°C or more, preferably 760°C or more.
On the other hand, the upper limit of the steel sheet temperature in the soaking step is preferably, but not limited to, 950°C or less from the perspective of reducing the load on the furnace body and preventing excessive coarsening of austenite grains. The annealing temperature is preferably 930°C or less, more preferably 910°C or less.

Holding time (holding time in soaking treatment): 20 seconds or more and 300 seconds or less

A holding time of less than 20 seconds in the soaking step may result in an insufficient reduction in the amount of hydrogen in the steel. This may also result in insufficient formation of austenite, and a steel sheet microstructure according to the present invention may not be formed. Thus, the holding time is 20 seconds or more, preferably 50 seconds or more.
On the other hand, a holding time of more than 300 seconds may result in coarse austenite grains and decarburization of the surface layer, so that a steel sheet microstructure according to the present invention may not be formed. Thus, the holding time is 300 seconds or less, preferably 200 seconds or less. The holding time is preferably 180 seconds or less, more preferably 160 seconds or less.
Hydrogen concentration (hydrogen concentration in soaking treatment): 0.2% or more by volume and 8% or less by volume
Reduction of iron oxide is completed in the reduction step, and the atmosphere in the soaking step is set to have a low hydrogen concentration within a range in which the reduced iron is not reoxidized, thereby reducing the amount of hydrogen introduced into the steel in the reduction step. When the hydrogen concentration is more than 8% by volume, the amount of hydrogen in the steel cannot be sufficiently reduced, and a steel sheet according to the present invention cannot be manufactured. Thus, the hydrogen concentration is 8% or less by volume, preferably 5% or less by volume.
On the other hand, a hydrogen concentration of less than 0.2% by volume may result in reoxidation of reduced iron. Thus, the hydrogen concentration in the soaking atmosphere is 0.2% or more by volume, preferably 0.5% or more by volume. The hydrogen concentration is preferably 0.8% or more by volume, more preferably 1.0% or more by volume.
Dew point of soaking atmosphere (annealing atmosphere) in soaking step (dew point in soaking treatment): -30°C or more (suitable conditions)
In an embodiment of the present invention, the dew point of the soaking atmosphere in the soaking step is preferably -30°C. A soaking treatment at a dew point of -30°C or more in the atmosphere in the soaking step can promote a decarburization reaction and more deeply form a surface soft layer. The dew point of the atmosphere in the soaking step is more preferably -15°C or more, still more preferably -5°C or more. The upper limit of the dew point of the atmosphere in the soaking step is preferably, but not limited to, 30°C or less, more preferably 25°C or less, to suitably prevent oxidation of the surface of the base steel sheet or the surface of the Fe-based electroplated layer and to improve the adhesiveness of coating when a hot-dip galvanized layer is provided. It is more preferably 20°C or less.

[First Cooling Step]

A steel sheet after the soaking step is cooled to, for example, a temperature at which the steel sheet can be immersed in hot-dip galvanizing. The cooling conditions are preferably, but not limited to, the following conditions.
Hydrogen concentration (hydrogen concentration in first cooling treatment): 0.5% or more by volume and 30% or less by volume, dew point (dew point in first cooling treatment): 0°C or less (suitable conditions)
Reoxidation during cooling can be suppressed by setting the hydrogen concentration of the cooling atmosphere in the first cooling step to 0.5% or more by volume and 30% or less by volume and the dew point to 0°C or less. More preferably, the hydrogen concentration is 1.0% or more by volume, and the dew point is -20°C or less.
The hydrogen concentration is preferably 1.5% or more by volume, more preferably 2.0% or more by volume.
The dew point is preferably -25°C or less, more preferably -30°C or less.
The dew point may also have any lower limit and is preferably -55°C or more, more preferably -50°C or more.
On the other hand, an increase in hydrogen in the steel due to hydrogen introduced during the cooling process can be suppressed by setting the hydrogen concentration to 30% or less by volume. The hydrogen concentration is more preferably 20% or less by volume, still more preferably 10% or less by volume.
Cooling from steel sheet temperature of 600°C to 900°C (steel sheet temperature in first cooling treatment) down to 150°C to 500°C at average cooling rate (average cooling rate in first cooling treatment) of 20°C/s or less (suitable conditions)
To more suitably prevent an increase in the amount of hydrogen in the steel during cooling, it is preferable to perform cooling from a steel sheet temperature of 600°C or more and 900°C or less at an average cooling rate of 20°C/s or less. The average cooling rate is preferably 10°C/s or more.

Furthermore, since it is necessary to lower the steel sheet temperature in the subsequent galvanization step to the temperature similar to the plating bath temperature, the cooling stop temperature (the cooling stop temperature in the first cooling) is 500°C or less. A cooling stop temperature of less than 150°C results in excessive martensite transformation before the galvanization step, and as a result of this being subjected to tempering after the galvanization step, the final microstructure sometimes has insufficient strength, so that the cooling stop temperature is 150°C or more.

The average cooling rate (°C/s) is determined by (steel sheet temperature (600°C to 900°C) - cooling stop temperature (150°C to 500°C))/cooling time (s) from start of cooling to stop of cooling.

[Galvanization Step]

A galvanized layer is formed on the surface of a steel sheet after the first cooling step. A typical method is a method of immersing a steel sheet in a hot-dip galvanizing bath.

Immersion in a hot-dip galvanizing bath will be described below as an example.

The conditions for immersion in a hot-dip galvanizing bath are not particularly limited, and the immersion may be performed by a general method. The hot-dip galvanizing bath is composed of Al, Zn, and incidental impurities, and the composition thereof is not particularly limited, but in one example, the Al concentration in the bath may be 0.05% or more by mass and 0.190% or less by mass. When the Al concentration in the bath is 0.05% or more by mass, the formation of bottom dross can be more suitably prevented. When the Al concentration in the bath is 0.190% or less by mass, the formation of top dross can be more suitably prevented. Also from the perspective of cost, the Al concentration in the bath is preferably 0.190% or less by mass. The temperature of the plating bath may be, but is not limited to, 440°C or more and 500°C or less. The galvanization applied in the present invention is not limited to the above-described hot-dip galvanizing as long as the desired steel sheet temperature is satisfied in the preceding and subsequent steps, and electrogalvanizing, zinc-based electroplating, or another method may also be used.

The coating weight per side is, in one example, but not limited to, 25 g/m² or more and 120 g/m² or less. A coating weight per side of 25 g/m² or more results in particularly high corrosion resistance and particularly easy control of the coating weight. A coating weight per side of 120 g/m² or less results in particularly high adhesiveness of coating. The coating weight may be adjusted by any method; for hot-dip galvanizing, for example, the coating weight can be adjusted using gas wiping through the gas pressure and the distance between the wiping nozzle and the steel sheet.

In the galvanization step, after the galvanized layer is formed, alloying treatment may be performed to manufacture a galvannealed steel sheet. When the galvanized layer is a galvannealed layer, desorption of hydrogen in the steel in the subsequent reheating step can be further promoted. The conditions for the alloying treatment are not particularly limited as long as a desired degree of alloying is achieved. For example, the alloying treatment in hot-dip galvanizing is preferably performed by holding at a predetermined steel sheet temperature for a predetermined time. For example, the steel sheet temperature may be 440°C or more. The steel sheet temperature may be 600°C or less. The holding time may be 5 seconds or more. The holding time may be 60 seconds or less.

For the alloying treatment, the Fe content (degree of alloying) of the coated layer is preferably 7% or more by mass. The Fe content (degree of alloying) is preferably 15% or less by mass. By setting the degree of alloying to 7% or more by mass, an η-Zn phase does not remain in the galvannealed layer, and the amount of hydrogen in the steel can be more suitably reduced in the reheating step. A degree of alloying of more than 15% by mass may result in promoted formation of a Γ phase at the interface between the galvannealed layer and a base material steel sheet and a decrease in the adhesiveness of coating, so that the degree of alloying is preferably 15% or less by mass.

[Second Cooling Step]

A steel sheet after the galvanization step is cooled to a cooling stop temperature of 100°C to 300°C. The cooling method is not particularly limited as long as the following cooling conditions are satisfied, for example, $N_2$ gas cooling, water cooling, or a combination thereof.

Cooling stop temperature (cooling stop temperature in second cooling treatment): 100°C or more and 300°C or less

In the second cooling step, non-transformed austenite is cooled to a temperature region lower than the Ms temperature to form martensite. The hydrogen diffusion rate is higher in martensite, which has a BCT crystal structure, than in austenite, which has an FCC crystal structure, and the reduction in the amount of hydrogen in the subsequent reheating step can be promoted. As described above, in a steel sheet according to the present invention, control should be performed so that 70% or more by area of the entire martensite in the microstructure is tempered martensite containing carbide of a predetermined size, and this cannot be satisfied at a cooling stop temperature of more than 300°C. Thus, the cooling stop temperature is 300°C or less, preferably 280°C or less. When the cooling stop temperature is less than 100°C, almost all of the austenite may be transformed into martensite at this time point, almost no non-transformed austenite may remain in the final microstructure, and ductility may be impaired. Furthermore, a desired strength may not be achieved. Thus, the cooling stop temperature is 100°C or more, preferably 120°C or more.

Average cooling rate from temperature range of 350°C to 450°C down to (Ms temperature - 100°C) (average cooling rate in second cooling treatment): 20°C/s or less

In the second cooling step, the steel sheet is preferably cooled so as to stay in the temperature range of Ms or lower and the cooling stop temperature or higher for a predetermined time. Thus, martensite formed immediately below the Ms temperature is self-tempered during cooling, and the formation of carbide in the martensite required for the present invention can be further promoted. An average cooling rate of more than 20°C/s may result in insufficient self-tempering and insufficient formation of the carbide.

Thus, the average cooling rate is 20°C/s or less, preferably 10°C/s or less, more preferably 5°C/s or less. The lower limit of the average cooling rate is preferably, but not limited to, 1°C/s or more from the perspective of more consistently preventing the size of the carbide (the average grain size of carbide contained in tempered martensite) from exceeding 200 nm due to excessive slow cooling.

The average cooling rate (°C/s) is determined by "(cooling start temperature (350°C to 450°C)) - (Ms temperature - 100°C))/cooling time (s) from start of cooling to (Ms temperature - 100°C)".

Five seconds or more residence in temperature range of 100°C to 350°C

In the second cooling step, a residence time of less than 5 seconds in the temperature range of 100°C to 350°C may result in insufficient self-tempering and insufficient formation of the carbide.

Thus, the residence time is 5 seconds or more, preferably 10 seconds or more, more preferably 15 seconds or more. The upper limit of the residence time is preferably, but not limited to, 60 seconds or less from the perspective of more consistently preventing the size of the carbide from exceeding 200 nm.

The Ms temperature is a martensite transformation start temperature and can be calculated using the following formula.

Ms (°C) = 539 - 423 × {[C% by mass] × 100/(100 - [α% by area])} - 30 × [Mn% by mass] - 12 × [Cr% by mass] - 18 × [Ni% by mass] - 8 × [Mo% by mass]

In this formula, [M% by mass] (M: element) denotes the amount of each element in the steel sheet. [α% by area] denotes the area fraction (%) of ferrite in the steel sheet microstructure after annealing.

[Reheating Step]

In this step, a steel sheet in the second cooling step is reheated to perform tempering of martensite necessary to manufacture a steel sheet according to the present invention and at the same time to reduce the amount of diffusible hydrogen.

In the reheating step, since the galvanized layer is already present on the surface layer of the steel sheet, it is not necessary to consider reoxidation of iron as in the soaking step, and the reheating step can be performed in an atmosphere with a low hydrogen concentration, for example, in an air atmosphere. On the other hand, if the hydrogen concentration is excessively high, the amount of diffusible hydrogen remaining in the steel may not be reduced and may even increase again at an excessive high hydrogen concentration. Thus, the hydrogen concentration in the reheating step is preferably, but not limited to, 0.2% or less by volume.

Reheating temperature: cooling stop temperature (cooling stop temperature in second cooling treatment) or more and 450°C or less

A reheating temperature lower than the cooling stop temperature (the cooling stop temperature in the second cooling treatment) results in insufficiently tempered martensite and no formation of the carbide and tempered martensite necessary for the present invention. A reheating temperature lower than the cooling stop temperature (the cooling stop temperature in the second cooling treatment) results in an insufficient effect of reducing the amount of diffusible hydrogen in the steel. Thus, the reheating temperature is equal to or higher than the cooling stop temperature (the cooling stop temperature in the second cooling treatment), preferably 120°C or more. On the other hand, a reheating temperature of more than 450°C results in a decrease in tensile strength and coarsening of carbide due to excessive tempering, so that a steel sheet according to the present invention cannot be manufactured. On the other hand, more than 450°C may result in zinc coating with a poor appearance. Thus, the reheating temperature is 450°C or less, preferably 430°C or less.

Holding time (holding time in reheating treatment): 5 to 600 seconds

A holding time of less than 5 seconds results in insufficiently tempered martensite, no formation of the carbide and tempered martensite necessary for the present invention, and an insufficient reduction in the amount of diffusible hydrogen in the steel. Thus, the holding time is 5 seconds or more, preferably 10 seconds or more. The holding time is more preferably 15 seconds or more, still more preferably 20 seconds or more.

On the other hand, a holding time of more than 600 seconds may result in not only a decrease in the production efficiency but also a decrease in tensile strength and coarsening of carbide caused by excessive tempering, and a steel sheet according to the present invention may not be manufactured. Thus, the holding time is 600 seconds or less, preferably 500 seconds or less. The holding time is more preferably 400 seconds or less, more preferably 300 seconds or less.

The production conditions other than the above-described conditions can be in accordance with a usual method.

The thickness of a galvanized steel sheet according to the present invention is preferably, but not limited to, 0.4 mm or more, more preferably 0.6 mm or more. The thickness is preferably more than 0.8 mm. The thickness is more preferably 0.9 mm or more. The thickness is still more preferably 1.0 mm or more. The thickness is still more preferably 1.2 mm or more.

The sheet thickness is preferably 3.2 mm or less, more preferably 3.0 mm or less.

<Member>

Next, a member according to an embodiment of the present invention will be described.

A member according to an embodiment of the present invention is a member manufactured by using the galvanized steel sheet described above (as a material). For example, the galvanized steel sheet as a material is subjected to at least one of forming and joining to manufacture a member.

The galvanized steel sheet has a high yield ratio (YR), high bendability and stretch flangeability, and high hydrogen embrittlement resistance, and has a tensile strength (TS) of 780 MPa or more and less than 1180 MPa. Thus, a member according to an embodiment of the present invention has a high yield ratio (YR), high bendability and stretch flangeability, and high hydrogen embrittlement resistance, and has a tensile strength (TS) of 780 MPa or more and less than 1180 MPa. Thus, a member according to an embodiment of the present invention is particularly suitable as a member used in the automotive field.

<Method for Manufacturing Member>

Next, a method for manufacturing a member according to an embodiment of the present invention will be described.

A method for manufacturing a member according to an embodiment of the present invention includes a step of subjecting the above-described galvanized steel sheet (for example, a galvanized steel sheet manufactured by the method for manufacturing a galvanized steel sheet described above) to at least one of forming and joining to manufacture a member.

The forming method may be, but is not limited to, for example, a typical processing method, such as press forming. Furthermore, the joining method may be, but is not limited to, for example, typical welding, such as spot welding, laser welding, or arc welding, riveting, caulking, or the like. The forming conditions and the joining conditions are not particularly limited and may be in accordance with a usual method.

EXAMPLES

The present invention will be more specifically described with reference to Examples. The scope of the present invention is not limited to the following examples.

<Example 1>

A steel with the chemical composition shown in Table 1 was used to manufacture a cold-rolled steel sheet with a thickness of 1.4 mm or a hot-rolled steel sheet with a thickness of 1.8 mm under the conditions shown in Table 2, to manufacture a galvanized steel sheet (hot-dip galvanized steel sheet), and to perform the following evaluation.

For all of the steel sheets, in the hot rolling step, the slab heating temperature was 1250°C, the finish rolling delivery temperature was 900°C, and the coiling temperature was 520°C. The reheating treatment in the reheating step was performed in the atmosphere.

Table 3 shows the evaluation results.

The galvanizing treatment and the alloying treatment in the galvanization step were performed under the following conditions. All of the following evaluations were performed within 72 hours after the steel sheets first reached room temperature (40°C or less) after the reheating step defined in the present invention.

- Plating bath composition: Zn bath containing 0.13% by mass of Al
- Plating bath temperature: 460°C
- Coating weight range: 30 to 60 g/m$^{-2}$
- Alloying temperature: 450°C to 560°C
- Degree of alloying range: 8.0% to 14.0% by mass

[Table 1]

| Steel symbol | Chemical composition (% by mass) | | | | | | | |
|---|---|---|---|---|---|---|---|---|
| | C | Si | Mn | P | S | Al | N | Others |
| A | 0.118 | 1.54 | 2.76 | 0.01 | 0.0005 | 0.040 | 0.0020 | - |
| B | 0.134 | 0.58 | 2.73 | 0.02 | 0.0010 | 0.030 | 0.0040 | - |
| C | 0.083 | 1.49 | 2.24 | 0.01 | 0.0010 | 0.050 | 0.0040 | - |
| D | 0.114 | 1.42 | 2.34 | 0.02 | 0.0030 | 0.040 | 0.0040 | - |
| E | 0.138 | 0.72 | 2.79 | 0.02 | 0.0030 | 0.040 | 0.0040 | - |
| F | 0.138 | 0.84 | 2.79 | 0.02 | 0.0030 | 0.040 | 0.0040 | - |
| G | 0.138 | 0.95 | 2.79 | 0.02 | 0.0030 | 0.040 | 0.0040 | - |
| H | 0.085 | 1.51 | 4.52 | 0.01 | 0.0005 | 0.040 | 0.0020 | - |
| I | 0.080 | 2.08 | 3.05 | 0.01 | 0.0005 | 0.040 | 0.0020 | - |
| J | 0.068 | 1.53 | 2.80 | 0.02 | 0.0010 | 0.030 | 0.0040 | - |
| K | 0.087 | 1.53 | 2.72 | 0.01 | 0.0005 | 0.040 | 0.0020 | Ti: 0.022 |
| L | 0.085 | 1.47 | 3.35 | 0.01 | 0.0010 | 0.030 | 0.0040 | Ti: 0.025, B: 0.0020 |
| M | 0.110 | 1.49 | 2.99 | 0.01 | 0.0010 | 0.050 | 0.0040 | Nb: 0.032 |
| N | 0.126 | 1.55 | 2.78 | 0.01 | 0.0005 | 0.040 | 0.0020 | Sb: 0.012 |
| O | 0.110 | 1.59 | 2.99 | 0.01 | 0.0010 | 0.030 | 0.0040 | Sn: 0.007 |
| P | 0.110 | 1.53 | 2.71 | 0.01 | 0.0005 | 0.040 | 0.0020 | V: 0.033 |
| Q | 0.085 | 1.56 | 2.70 | 0.01 | 0.0010 | 0.050 | 0.0040 | Cu: 0.21 |
| R | 0.101 | 1.47 | 2.89 | 0.01 | 0.0010 | 0.050 | 0.0040 | Cr: 0.50 |
| S | 0.089 | 1.45 | 2.85 | 0.01 | 0.0005 | 0.040 | 0.0020 | Ni: 0.20 |
| T | 0.101 | 1.54 | 2.52 | 0.01 | 0.0010 | 0.050 | 0.0040 | Mo: 0.11 |
| U | 0.109 | 1.47 | 2.47 | 0.01 | 0.0005 | 0.040 | 0.0020 | Ta: 0.005 |
| V | 0.124 | 1.50 | 2.64 | 0.01 | 0.0010 | 0.050 | 0.0040 | W: 0.015 |
| W | 0.108 | 1.55 | 2.70 | 0.01 | 0.0010 | 0.030 | 0.0040 | Zr: 0.0030 |
| X | 0.117 | 1.54 | 2.98 | 0.01 | 0.0005 | 0.040 | 0.0020 | Ca: 0.0010 |
| Y | 0.109 | 1.53 | 2.50 | 0.01 | 0.0010 | 0.050 | 0.0040 | Mg: 0.0020 |
| Z | 0.091 | 1.53 | 2.52 | 0.01 | 0.0005 | 0.040 | 0.0020 | Zn: 0.005 |
| AA | 0.091 | 1.43 | 2.63 | 0.01 | 0.0010 | 0.050 | 0.0040 | Co: 0.005 |
| AB | 0.090 | 1.45 | 2.88 | 0.01 | 0.0010 | 0.050 | 0.0040 | Ce: 0.0010 |
| AC | 0.101 | 1.53 | 2.63 | 0.01 | 0.0005 | 0.040 | 0.0020 | Se: 0.0020 |

(continued)

| Steel symbol | Chemical composition (% by mass) | | | | | | | |
|---|---|---|---|---|---|---|---|---|
| | C | Si | Mn | P | S | Al | N | Others |
| AD | 0.090 | 1.56 | 2.99 | 0.01 | 0.0010 | 0.050 | 0.0040 | Te: 0.0080 |
| AE | 0.098 | 1.56 | 2.46 | 0.01 | 0.0005 | 0.040 | 0.0020 | Ge: 0.0080 |
| AF | 0.101 | 1.49 | 2.59 | 0.01 | 0.0010 | 0.050 | 0.0040 | As: 0.0070 |
| AG | 0.120 | 1.55 | 2.54 | 0.01 | 0.0005 | 0.040 | 0.0020 | Sr: 0.0070 |
| AH | 0.119 | 1.45 | 2.46 | 0.01 | 0.0010 | 0.050 | 0.0040 | Cs: 0.0050 |
| AI | 0.113 | 1.51 | 2.46 | 0.01 | 0.0005 | 0.040 | 0.0020 | Hf: 0.0030 |
| AJ | 0.129 | 1.45 | 3.00 | 0.01 | 0.0010 | 0.050 | 0.0040 | Pb: 0.0020 |
| AK | 0.108 | 1.43 | 2.47 | 0.01 | 0.0005 | 0.040 | 0.0020 | Bi: 0.0020 |
| AL | 0.124 | 1.50 | 2.88 | 0.01 | 0.0010 | 0.050 | 0.0040 | REM: 0.0030 |
| AM | 0.245 | 1.95 | 3.45 | 0.08 | 0.0185 | 0.088 | 0.0092 | B: 0.095,Ti: 0.195,Nb: 0.188,Sb: 0.185, Sn: 0.189, V: 0.092,Cu: 1.88,Cr: 1.82, Ni: 1.88,Mo: 0.89,Ta: 0.088,W: 0.482, Zr: 0.018,Ca: 0.0185,Mg: 0.0188,Zn: 0.017, Co: 0.015,Ce: 0.0180,Se: 0.0198,Te: 0.0192, Ge: 0.0186, As: 0.0191,Sr: 0.0199,Cs: 0.0185, Hf: 0.0185,Pb: 0.0183,Bi: 0.0196,REM: 0.0188 |
| - The remainder other than the above is composed of Fe and incidental impurities. | | | | | | | | |

[Table 2]

| No. | Steel symbol | Cold rolling step: Rolling reduction (%) | Oxidation step: Oxygen concentration (vol. ppm) | Oxidation step: Highest temperature reached (°C) | Reduction step: Highest temperature reached (°C) | Reduction step: Holding time (s) | Reduction step: Dew point (°C) | Reduction step: Hydrogen concentration (vol. %) | Soaking step: Annealing temperature (°C) | Soaking step: Holding time (s) | Soaking step: Dew point (°C) | Soaking step: Hydrogen concentration (vol. %) | First cooling step: Dew point (°C) | First cooling step: Hydrogen concentration (vol. %) | First cooling step: Average cooling rate (°C/s) | Alloying treatment after galvanization step (Yes: O, No: -) | Ms (°C) | Second cooling step: Average cooling rate from 350°C to 450°C down to (Ms-100°C) (°C/s) | Second cooling step: 100°C to 350°C residence time (s) | Second cooling step: Cooling stop temperature (°C) | Reheating step: Reheating temperature (°C) | Reheating step: Holding time (s) | Material type |
|---|---|---|---|---|---|---|---|---|---|---|---|---|---|---|---|---|---|---|---|---|---|---|---|
| 1 | A | 50 | 2000 | 650 | 820 | 25 | -15 | 15 | 820 | 50 | -15 | 2 | -35 | 5 | 10 | O | 390 | 5 | 20 | 200 | 400 | 60 | GA |
| 2 | A | 50 | 2000 | 650 | 820 | 25 | -15 | 15 | 820 | 50 | -15 | 8 | -35 | 5 | 10 | O | 390 | 5 | 20 | 200 | 400 | 60 | GA |
| 3 | A | 50 | 2000 | 650 | 820 | 25 | -15 | 15 | 820 | 50 | -15 | _10_ | -35 | 5 | 10 | O | 390 | 5 | 20 | 200 | 400 | 60 | GA |
| 4 | A | 50 | 2000 | 650 | 820 | 25 | -15 | 15 | 820 | 50 | -15 | 2 | -35 | 5 | 10 | O | 390 | 5 | 20 | 200 | _50_ | 60 | GA |
| 5 | A | 50 | 2000 | 650 | 820 | 25 | -15 | 15 | 820 | 50 | -15 | 2 | -35 | 5 | 10 | - | 390 | 5 | 20 | 200 | 400 | 60 | GI |
| 6 | A | 50 | 2000 | 650 | 820 | 25 | -15 | 15 | 820 | 50 | -15 | 2 | -35 | 15 | 10 | O | 390 | 5 | 20 | 200 | 400 | 60 | GA |
| 7 | A | 50 | 2000 | 650 | 820 | 25 | -15 | 15 | 820 | 50 | -15 | 2 | -35 | 25 | 10 | O | 390 | 5 | 20 | 200 | 400 | 60 | GA |
| 8 | A | 0 | 2000 | 650 | 820 | 25 | -15 | 15 | 820 | 50 | -15 | 2 | -35 | 5 | 10 | O | 390 | 5 | 20 | 200 | 400 | 60 | GA |
| 9 | A | 50 | 2000 | 650 | 820 | 20 | -15 | 15 | 820 | 50 | -15 | 2 | -35 | 5 | 10 | O | 390 | 5 | 20 | 200 | 400 | 60 | GA |
| 10 | B | 50 | 2000 | 650 | 820 | 25 | -15 | 15 | 820 | 50 | -15 | 2 | -35 | 5 | 10 | O | 395 | 5 | 20 | 200 | 400 | 60 | GA |
| 11 | B | 50 | 2000 | 650 | 820 | 25 | -15 | 15 | 820 | 50 | -15 | 8 | -35 | 5 | 10 | O | 395 | _30_ | _4_ | 250 | 400 | 60 | GA |
| 12 | B | 50 | 2000 | 650 | 820 | 25 | -15 | 15 | 820 | 50 | -15 | 8 | -35 | 5 | 10 | O | 395 | 5 | _4_ | 250 | 400 | 60 | GA |
| 13 | B | 50 | 2000 | 650 | 820 | 25 | -15 | 15 | 820 | 50 | -15 | 8 | -35 | 5 | 10 | O | 395 | 5 | 20 | _310_ | 400 | 60 | GA |
| 14 | B | 50 | · | · | 820 | 25 | -15 | 15 | 820 | 50 | -15 | 2 | -35 | 5 | 10 | O | 395 | 5 | 20 | 200 | 400 | 60 | GA |
| 15 | C | 50 | 2000 | 650 | 740 | 25 | -15 | 15 | _740_ | 50 | -15 | 8 | -35 | 5 | 10 | O | 331 | 5 | 20 | 200 | 400 | 60 | GA |
| 16 | C | 50 | 2000 | 650 | 820 | 25 | -15 | 15 | 820 | _5_ | -15 | 8 | -35 | 5 | 10 | O | 355 | 5 | 20 | 200 | 400 | 60 | GA |
| 17 | C | 50 | 2000 | 650 | 820 | 25 | -15 | 15 | 820 | 50 | -15 | 8 | -35 | 5 | 10 | O | 384 | 5 | 20 | 200 | 400 | 60 | GA |
| 18 | C | 50 | 2000 | 650 | 820 | 25 | -15 | 15 | 820 | 50 | -15 | 8 | -35 | 5 | 10 | O | 384 | 10 | 20 | 200 | 400 | 60 | GA |
| 19 | C | 50 | 2000 | 650 | 820 | 25 | -15 | 15 | 820 | 50 | -15 | 8 | -35 | 5 | 10 | O | 384 | 5 | 10 | _50_ | 400 | 60 | GA |
| 20 | C | 50 | 2000 | 650 | 820 | 25 | -15 | 15 | 820 | 50 | -15 | 2 | -35 | 5 | 10 | O | 384 | 5 | 20 | 200 | 400 | 60 | GA |
| 21 | D | 50 | 2000 | 650 | 820 | 25 | -15 | 15 | 820 | 50 | -15 | 2 | -35 | 5 | 10 | O | 400 | 5 | 20 | 200 | 400 | 60 | GA |
| 22 | E | 50 | 2000 | 650 | 820 | 25 | -15 | 15 | 820 | 50 | -15 | 2 | -35 | 5 | 10 | O | 377 | 5 | 20 | 200 | 400 | 60 | GA |
| 23 | F | 50 | 2000 | 650 | 820 | 25 | -15 | 15 | 820 | 50 | -15 | 2 | -35 | 5 | 10 | O | 372 | 5 | 20 | 200 | 400 | 60 | GA |
| 24 | G | 50 | 2000 | 650 | 820 | 25 | -15 | 15 | 820 | 50 | -15 | 2 | -35 | 5 | 10 | O | 368 | 5 | 20 | 200 | 400 | 60 | GA |
| 25 | H | 50 | 2000 | 650 | 820 | 25 | -15 | 15 | 820 | 50 | -15 | 2 | -35 | 5 | 10 | O | 366 | 5 | 20 | 200 | 400 | 60 | GA |
| 26 | I | 50 | 2000 | 650 | 820 | 25 | -15 | 15 | 820 | 50 | -15 | 2 | -35 | 5 | 10 | O | 391 | 5 | 20 | 200 | 400 | 60 | GA |
| 27 | J | 50 | 2000 | 650 | 820 | 25 | -15 | 15 | 820 | 50 | -15 | 2 | -35 | 5 | 10 | O | 407 | 5 | 20 | 200 | 400 | 60 | GA |
| 28 | K | 50 | 2000 | 650 | 820 | 25 | -15 | 15 | 820 | 50 | -15 | 2 | -35 | 5 | 10 | O | 408 | 5 | 20 | 200 | 400 | 60 | GA |
| 29 | L | 50 | 2000 | 650 | 820 | 25 | -15 | 15 | 820 | 50 | -15 | 2 | -35 | 5 | 10 | O | 391 | 5 | 20 | 200 | 400 | 60 | GA |
| 30 | M | 50 | 2000 | 650 | 820 | 25 | -15 | 15 | 820 | 50 | -15 | 2 | -35 | 5 | 10 | O | 387 | 5 | 20 | 200 | 400 | 60 | GA |
| 31 | N | 50 | 2000 | 650 | 820 | 25 | -15 | 15 | 820 | 50 | -15 | 2 | -35 | 5 | 10 | O | 385 | 5 | 20 | 200 | 400 | 60 | GA |
| 32 | O | 50 | 2000 | 650 | 820 | 25 | -15 | 15 | 820 | 50 | -15 | 2 | -35 | 5 | 10 | O | 387 | 5 | 20 | 200 | 400 | 60 | GA |
| 33 | P | 50 | 2000 | 650 | 820 | 25 | -15 | 15 | 820 | 50 | -15 | 2 | -35 | 5 | 10 | O | 396 | 5 | 20 | 200 | 400 | 60 | GA |
| 34 | Q | 50 | 2000 | 650 | 820 | 25 | -15 | 16 | 820 | 50 | 16 | 2 | -35 | 5 | 10 | O | 410 | 5 | 20 | 200 | 400 | 60 | GA |
| 35 | R | 50 | 2000 | 650 | 820 | 25 | -15 | 15 | 820 | 50 | -15 | 2 | -35 | 5 | 10 | O | 389 | 5 | 20 | 200 | 400 | 60 | GA |
| 36 | S | 50 | 2000 | 650 | 820 | 25 | -15 | 15 | 820 | 50 | -15 | 2 | -35 | 5 | 10 | O | 400 | 5 | 20 | 200 | 400 | 60 | GA |
| 37 | T | 50 | 2000 | 650 | 820 | 25 | -15 | 15 | 820 | 50 | -15 | 2 | -35 | 5 | 10 | O | 406 | 5 | 20 | 200 | 400 | 60 | GA |
| 38 | U | 50 | 2000 | 650 | 820 | 25 | -15 | 15 | 820 | 50 | -15 | 2 | -35 | 5 | 10 | O | 403 | 5 | 20 | 200 | 400 | 60 | GA |
| 39 | V | 50 | 2000 | 650 | 820 | 25 | -15 | 15 | 820 | 50 | -15 | 2 | -35 | 5 | 10 | O | 390 | 5 | 20 | 200 | 400 | 60 | GA |
| 40 | W | 50 | 2000 | 650 | 820 | 25 | -15 | 15 | 820 | 50 | -15 | 2 | -35 | 5 | 10 | O | 397 | 5 | 20 | 200 | 400 | 60 | GA |
| 41 | X | 50 | 2000 | 650 | 820 | 25 | -15 | 15 | 820 | 50 | -15 | 2 | -35 | 5 | 10 | O | 384 | 5 | 20 | 200 | 400 | 60 | GA |
| 42 | Y | 50 | 2000 | 650 | 820 | 25 | -15 | 15 | 820 | 50 | -15 | 2 | -35 | 5 | 10 | O | 402 | 5 | 20 | 200 | 400 | 60 | GA |
| 43 | Z | 50 | 2000 | 650 | 820 | 25 | -15 | 15 | 820 | 50 | -15 | 2 | -35 | 5 | 10 | O | 412 | 5 | 20 | 200 | 400 | 60 | GA |
| 44 | AA | 50 | 2000 | 650 | 820 | 25 | -15 | 15 | 820 | 50 | -15 | 2 | -35 | 5 | 10 | O | 409 | 5 | 20 | 200 | 400 | 60 | GA |
| 45 | AB | 50 | 2000 | 650 | 820 | 25 | -15 | 15 | 820 | 50 | -15 | 2 | -35 | 5 | 10 | O | 402 | 5 | 20 | 200 | 400 | 60 | GA |
| 46 | AC | 50 | 2000 | 650 | 820 | 25 | -15 | 15 | 820 | 50 | -15 | 2 | -35 | 5 | 10 | O | 403 | 5 | 20 | 200 | 400 | 60 | GA |
| 47 | AD | 50 | 2000 | 650 | 820 | 25 | -15 | 15 | 820 | 50 | -15 | 2 | -35 | 5 | 10 | O | 399 | 5 | 20 | 200 | 400 | 60 | GA |
| 48 | AE | 50 | 2000 | 650 | 820 | 25 | -15 | 15 | 820 | 50 | -15 | 2 | -35 | 5 | 10 | O | 410 | 5 | 20 | 200 | 400 | 60 | GA |
| 49 | AF | 50 | 2000 | 650 | 820 | 25 | -15 | 15 | 820 | 50 | -15 | 2 | -35 | 5 | 10 | O | 404 | 5 | 20 | 200 | 400 | 60 | GA |
| 50 | AG | 50 | 2000 | 650 | 820 | 25 | -15 | 15 | 820 | 50 | -15 | 2 | -35 | 5 | 10 | O | 395 | 5 | 20 | 200 | 400 | 60 | GA |
| 51 | AH | 50 | 2000 | 650 | 820 | 25 | -15 | 15 | 820 | 50 | -15 | 2 | -35 | 5 | 10 | O | 398 | 5 | 20 | 200 | 400 | 60 | GA |
| 52 | AI | 50 | 2000 | 650 | 820 | 25 | -15 | 15 | 820 | 50 | -15 | 2 | -35 | 5 | 10 | O | 401 | 5 | 20 | 200 | 400 | 60 | GA |
| 53 | AJ | 50 | 2000 | 650 | 820 | 25 | -15 | 15 | 820 | 50 | -15 | 2 | -35 | 5 | 10 | O | 376 | 5 | 20 | 200 | 400 | 60 | GA |
| 54 | AK | 50 | 2000 | 650 | 820 | 25 | -15 | 15 | 820 | 50 | -15 | 2 | -35 | 5 | 10 | O | 404 | 5 | 20 | 200 | 400 | 60 | GA |
| 55 | AL | 50 | 2000 | 650 | 820 | 25 | -15 | 15 | 820 | 50 | -15 | 2 | -35 | 5 | 10 | O | 383 | 5 | 20 | 200 | 400 | 60 | GA |
| 56 | AM | 50 | 2000 | 650 | 820 | 25 | -15 | 15 | 820 | 50 | -15 | 2 | -35 | 5 | 10 | O | 266 | 5 | 20 | 150 | 400 | 60 | GA |

<Tensile Test>

A JIS No. 5 test piece for tensile test (JIS Z 2201) was taken from the resulting galvanized steel sheet in the direction perpendicular to the rolling direction and was subjected to a tensile test according to the provisions of JIS Z 2241 (2011) at a strain rate of $10^{-3}$/s to determine the yield strength (YS), tensile strength (TS), elongation (EL), and yield ratio (YR = YS/TS). Those with a TS of 780 MPa or more and less than 1180 MPa and a YR of 0.60 or more were defined as examples of the present invention.

When the product of EL and TS was 10000 or more, the TS-EL balance was evaluated to be good.

<Hole Expansion Test>

A hole expansion test was performed by a method according to JIS Z 2256 to evaluate the stretch flangeability. A 100 mm x 100 mm test specimen was taken from the resulting galvanized steel sheet, and a hole with a diameter of 10 mm was formed by punching in the central portion of the test specimen. The clearance for the punching was 12.5%. Next, while a die with an inner diameter of 75 mm was used to apply a blank holding force of 9 ton (88.26 kN) to the periphery of the hole, a conical punch with a vertex angle of 60 degrees was pushed into and expand the hole to measure the diameter of the hole at the crack initiation. The limiting hole expansion ratio $\lambda$ (%) was determined using the following formula. Those with $\lambda$ of 35% or more were defined as examples of the present invention.

$$\lambda\ (\%) = \{(Df - D0)/D0\}\ x\ 100$$

Df: diameter (mm) of hole at crack initiation
D0: diameter of hole before hole expansion (mm)

<Microstructure Observation>

A test specimen for microstructure observation was taken from the resulting galvanized steel sheet, a cross section of the steel sheet in the thickness direction parallel to the rolling direction was polished and then corroded with a nital solution, and the microstructures of three visual fields in a region from the surface to 1/8 of the sheet thickness and a region from 1/8 to 3/8 of the sheet thickness were photographed with a SEM at a magnification of 1500 times.

The area fraction of retained austenite was individually determined by measuring the X-ray diffraction intensity, and the area fraction of as-quenched martensite was determined by subtracting the area fraction of retained austenite from the area fraction of a white portion (as-quenched martensite and retained austenite). The area fraction of retained austenite was determined from the ratio of the integrated X-ray diffraction intensity of (200), (220), and (311) planes in fcc iron to the integrated X-ray diffraction intensity of (200), (211), and (220) planes in bcc iron at a quarter thickness. The retained austenite is calculated as a volume fraction by the above measurement and, assuming that the retained austenite is three-dimensionally homogeneous, the volume fraction of the retained austenite is defined as the area fraction of the retained austenite.

The area fraction of each constituent phase was determined by the above-described method from an image thus taken. As the constituent phase area fraction in each region, an average value in all the photographed images was used.

In a region from 1/8 to 3/8 of the thickness of the base steel sheet, the microstructure of one visual field was photographed with a SEM at a magnification of 5000 times to determine the number and the total area of carbides in prior-austenite grains including the martensite from the image, and the area per piece of carbide was calculated to determine the average grain size of the carbides. Here, the average grain size is an average value of a major axis length and a minor axis length when the grain is approximated to an ellipse. For a piece of carbide, in the SEM image, a region integrally formed without interruption is regarded as a piece to be measured.

<Quantitative Determination of Hydrogen in Steel>

A test specimen for hydrogen analysis with a size of approximately 5 x 30 mm was taken from the resulting galvanized steel sheet, the coated layer on the surface was removed with a precision grinder, the test specimen was placed in a quartz tube whose atmosphere was replaced with Ar gas, the test specimen was heated to 600°C at a heating rate of 200°C/h, and the amount of hydrogen released during heating was measured by gas chromatography. The integrated amount of hydrogen released in the temperature range of room temperature to 200°C was determined as the "amount of diffusible hydrogen", and the integrated amount of hydrogen released in the temperature range of 350°C or more and 600°C or less was determined as the "amount of trapped hydrogen". Those with an amount of diffusible hydrogen of 0.45 ppm by mass or less were defined as examples of the present invention.

The amount of diffusible hydrogen and the amount of trapped hydrogen were measured after completion of the production of the steel sheet.

<Bending Test>

A 35 mm x 100 mm strip specimen was taken from the resulting galvanized steel sheet such that the direction parallel to the rolling direction became a bending test axis, and a 90-degree V-bending test was performed at a stroke speed of 50 mm/s, at an indentation load of 10 ton, for a press holding time of 5 seconds, and at various bending radii. For a steel sheet with a thickness of more than 1.4 mm, the test was performed after grinding one side of the steel sheet to 1.4 mm. The test was performed with the ground surface on the inside (valley side) of the bend so that the grinding did not affect the results of the bending test. After the test, a ridge line portion of a bending peak of the test specimen was observed with a 10x magnifier to determine R/t, which is a value calculated by dividing the minimum bending radius R (mm) at which a crack with a length of 0.5 mm or more was not recognized by the sheet thickness t (mm) (t = 1.4, 1.8 mm). Those satisfying either of (A) and (B) were defined as examples of the present invention.

(A) TS: 780 MPa or more and less than 980 MPa and R/t: 4.5 or less
(B) TS: 980 MPa or more and less than 1180 MPa and R/t: 5.0 or less

<Evaluation of Hydrogen Embrittlement Resistance>

A 30 mm x 100 mm test specimen was taken from the resulting galvanized steel sheet, a spacer with a thickness of 2 mm was placed at both ends, and the center between the spacers was spot-welded to prepare a welded specimen. For the spot welding, an inverter DC resistance spot welding machine was used, and a dome-shaped electrode with a tip diameter of 6 mm made of chromium copper was used. The welding pressure was 380 kgf, the weld time was 16 cycles/50 Hz, and the holding time was 5 cycles/50 Hz. The welding current value was adjusted so as to form a nugget diameter corresponding to the sheet thickness. To satisfy the following formula (2), the nugget diameter was 3.8 mm for a sheet thickness of 1.4 mm, and 4.4 mm for a sheet thickness of 1.8 mm.

$$3.0 \times t^{1/2} < \text{nugget diameter} < 3.5 \times t^{1/2} \quad (2)$$

In the formula (2), t denotes the sheet thickness (mm).
After being left to stand for 24 hours from the spot welding, the spacer portion was cut off, a cross section of the nugget was observed for evaluation according to the following criteria, and those with a rank of 1 or 2 were considered to be within the preferred range of the present invention.

| Crack observation result | Rank |
| --- | --- |
| No crack initiation: | 1 (particularly high hydrogen embrittlement resistance) |
| Only microcrack of 100 $\mu$m or less occurred: | 2 (high hydrogen embrittlement resistance) |
| Crack of more than 100 $\mu$m: | 3 (low hydrogen embrittlement resistance) |

[Table 3]

| No. | Steel sheet microstructure Amount of hydrogen in steel | | | | | | Steel sheet characteristics | | | | | | | | Notes |
| --- | --- | --- | --- | --- | --- | --- | --- | --- | --- | --- | --- | --- | --- | --- | --- |
| | Ferrite area fraction | Martensite + bainite (M+B) area fraction | Retained $\gamma$ area fraction | *1 Area fraction | Amount of diffusible hydrogen (room temperature to 200°C) | Amount of trapped hydrogen (350°C to 600°C) | YS | TS | EL | TS·EL | YR | $\lambda$% | R/t | Crack observation | Notes |
| | % | % | % | % | ppm by mass | ppm by mass | MPa | MPa | % | MPa·% | | | | | |
| 1 | 23 | 72 | 5 | 73 | 0.24 | 0.09 | 763 | 1060 | 14 | 14840 | *0.72* | 48 | 4.3 | 1 | Inventive example |
| 2 | 25 | 71 | 4 | 73 | 0.33 | 0.09 | 739 | 1056 | 15 | 15840 | 0.70 | 49 | 4.3 | 2 | Inventive example |
| 3 | 20 | 75 | 5 | 74 | **0.47** | 0.09 | 750 | 1120 | 15 | 16800 | 0.67 | **33** | **5.4** | **3** | **Comparative example** |
| 4 | 27 | 68 | 5 | **65** | **0.48** | 0.03 | 740 | 1072 | 15 | 16080 | 0.69 | **32** | **5.7** | **3** | **Comparative example** |
| 5 | 22 | 73 | 5 | 76 | 0.30 | 0.09 | 729 | 1013 | 16 | 16208 | *0.72* | 44 | 4.6 | 2 | Inventive example |
| 6 | 23 | 72 | 5 | 73 | 0.35 | 0.09 | 743 | 1004 | 16 | 16064 | 0.74 | 47 | 4.3 | 2 | Inventive example |
| 7 | 25 | 71 | 4 | 75 | 0.35 | 0.09 | 750 | 1013 | 16 | 16208 | 0.74 | 45 | 4.6 | 2 | Inventive example |
| 8 | 24 | 72 | 4 | 75 | 0.25 | 0.09 | 766 | 1075 | 14 | 15050 | 0.71 | 47 | 4.3 | 1 | Inventive example |
| 9 | 24 | 73 | 3 | 72 | 0.26 | 0.07 | 768 | 1054 | 14 | 14756 | 0.73 | 47 | 4.3 | 1 | Inventive example |
| 10 | 24 | 72 | 4 | 75 | 0.25 | 0.14 | 739 | 1027 | 15 | 15405 | *0.72* | 49 | 4.6 | 1 | Inventive example |
| 11 | 25 | 72 | 3 | **65** | **0.48** | 0.02 | 884 | 1078 | 13 | 14014 | 0.82 | **31** | **5.4** | **3** | **Comparative example** |

(continued)

| No. | Ferrite area fraction % | Martensite + bainite (M+B) area fraction % | Retained γ area fraction % | *1 Area fraction % | Amount of diffusible hydrogen (room temperature to 200°C) ppm by mass | Amount of trapped hydrogen (350°C to 600°C) ppm by mass | YS MPa | TS MPa | EL % | TS·EL MPa·% | YR | λ % | R/t | Crack observation | Notes |
|---|---|---|---|---|---|---|---|---|---|---|---|---|---|---|---|
| 12 | 26 | 71 | 3 | **68** | **0.46** | 0.04 | 894 | 1065 | 13 | 13845 | 0.84 | **33** | **5.4** | **3** | Comparative example |
| 13 | 23 | 73 | 4 | **55** | **0.50** | 0.01 | 675 | 1154 | 15 | 17310 | **0.58** | **25** | **6.4** | **3** | Comparative example |
| 14 | 26 | 70 | 4 | 74 | 0.22 | 0.14 | 734 | 1019 | 16 | 16304 | 0.72 | 50 | 4.6 | 1 | Inventive example |
| 15 | **69** | **23** | 8 | 70 | 0.18 | 0.01 | 442 | **775** | 16 | 12400 | **0.57** | **30** | 3.9 | 1 | Comparative example |
| 16 | **66** | 28 | 6 | 71 | 0.26 | 0.01 | 450 | 780 | 15 | 11700 | **0.58** | **32** | 3.9 | 1 | Comparative example |
| 17 | 55 | 39 | 6 | 76 | 0.10 | 0.12 | 722 | 849 | 19 | 16131 | 0.85 | 65 | 3.9 | 1 | Inventive example |
| 18 | 58 | 38 | 4 | 70 | 0.12 | 0.06 | 664 | 830 | 17 | 14110 | 0.80 | 66 | 3.9 | 1 | Inventive example |
| 19 | 62 | 34 | 4 | **63** | 0.16 | 0.02 | 615 | **750** | 19 | 14250 | 0.82 | 58 | 3.2 | 1 | Comparative example |
| 20 | 59 | 36 | 5 | 79 | 0.08 | 0.12 | 660 | 835 | 20 | 16700 | 0.79 | 65 | 3.6 | 1 | Inventive example |
| 21 | 24 | 71 | 5 | 78 | 0.27 | 0.11 | 717 | 1070 | 13 | 13910 | 0.67 | 48 | 4.3 | 1 | Inventive example |
| 22 | 23 | 73 | 4 | 75 | 0.22 | 0.08 | 770 | 1027 | 15 | 15405 | 0.75 | 45 | 4.3 | 1 | Inventive example |

| No. | Steel sheet microstructure Amount of hydrogen in steel | | | | | | Steel sheet characteristics | | | | | | | | Notes |
|-----|------------------|----------------------------------------|-------------------------|------------------|------------------------------------------------------------------|-----------------------------------------------------|-----|-----|-----|-------|------|-----|-----|-------------------|-------|
|     | Ferrite area fraction | Martensite + bainite (M+B) area fraction | Retained γ area fraction | *1 Area fraction | Amount of diffusible hydrogen (room temperature to 200°C) | Amount of trapped hydrogen (350°C to 600°C) | YS | TS | EL | TS·EL | YR | λ% | R/t | Crack observation |       |
|     | % | % | % | % | ppm by mass | ppm by mass | MPa | MPa | % | MPa·% |    |    |     |                   |       |
| 23 | 28 | 67 | 5 | 72 | 0.20 | 0.08 | 770 | 1027 | 15 | 15405 | 0.75 | 46 | 4.3 | 1 | Inventive example |
| 24 | 24 | 70 | 6 | 73 | 0.18 | 0.08 | 770 | 1027 | 16 | 16432 | 0.75 | 48 | 4.3 | 1 | Inventive example |
| 25 | 22 | 73 | 5 | 75 | 0.38 | 0.09 | 794 | **1221** | 10 | 12210 | 0.65 | 35 | **6.4** | 2 | **Comparative example** |
| 26 | 27 | 69 | 4 | **64** | **0.47** | 0.01 | 819 | 1050 | 15 | 15750 | 0.78 | **32** | **6.1** | **3** | **Comparative example** |
| 27 | 21 | 74 | 5 | **65** | **0.48** | 0.01 | 628 | 785 | 9 | 7065 | 0.80 | 45 | **6.4** | 2 | **Comparative example** |
| 28 | 28 | 67 | 5 | 75 | 0.23 | 0.14 | 841 | 1064 | 15 | 15960 | 0.79 | 50 | 4.3 | 1 | Inventive example |
| 29 | 23 | 72 | 5 | 80 | 0.26 | 0.11 | 753 | 1017 | 16 | 16272 | 0.74 | 46 | 4.3 | 1 | Inventive example |
| 30 | 25 | 71 | 4 | 79 | 0.23 | 0.11 | 656 | 1041 | 15 | 15615 | 0.63 | 49 | 4.6 | 1 | Inventive example |
| 31 | 23 | 72 | 5 | 78 | 0.22 | 0.10 | 688 | 1027 | 16 | 16432 | 0.67 | 48 | 4.3 | 1 | Inventive example |
| 32 | 25 | 70 | 5 | 77 | 0.26 | 0.14 | 860 | 1049 | 15 | 15735 | 0.82 | 47 | 4.3 | 1 | Inventive example |
| 33 | 24 | 70 | 6 | 80 | 0.26 | 0.10 | 857 | 1032 | 16 | 16512 | 0.83 | 42 | 4.6 | 1 | Inventive example |

(continued)

| No. | Steel sheet microstructure | | | | Amount of hydrogen in steel | | Steel sheet characteristics | | | | | | | | |
| | Ferrite area fraction % | Martensite + bainite (M+B) area fraction % | Retained γ area fraction % | *1 Area fraction % | Amount of diffusible hydrogen (room temperature to 200°C) ppm by mass | Amount of trapped hydrogen (350°C to 600°C) ppm by mass | YS MPa | TS MPa | EL % | TS·EL MPa·% | YR | λ % | R/t | Crack observation | Notes |
|---|---|---|---|---|---|---|---|---|---|---|---|---|---|---|---|
| 34 | 27 | 69 | 4 | 78 | 0.24 | 0.10 | 803 | 1043 | 15 | 15645 | 0.77 | 50 | 4.3 | 1 | Inventive example |
| 35 | 27 | 69 | 4 | 75 | 0.23 | 0.12 | 681 | 1048 | 15 | 15720 | 0.65 | 43 | 4.6 | 1 | Inventive example |
| 36 | 26 | 70 | 4 | 84 | 0.20 | 0.11 | 755 | 1049 | 15 | 15735 | 0.72 | 46 | 4.3 | 1 | Inventive example |
| 37 | 27 | 67 | 6 | 77 | 0.21 | 0.08 | 802 | 1028 | 16 | 16448 | 0.78 | 44 | 4.6 | 1 | Inventive example |
| 38 | 27 | 69 | 4 | 83 | 0.25 | 0.10 | 688 | 1043 | 15 | 15645 | 0.66 | 41 | 4.6 | 1 | Inventive example |
| 39 | 22 | 73 | 5 | 79 | 0.22 | 0.08 | 888 | 1021 | 16 | 16336 | 0.87 | 47 | 4.3 | 1 | Inventive example |
| 40 | 22 | 73 | 5 | 78 | 0.20 | 0.09 | 640 | 1032 | 15 | 15480 | 0.62 | 40 | 4.6 | 1 | Inventive example |
| 41 | 25 | 70 | 5 | 80 | 0.25 | 0.10 | 739 | 1013 | 16 | 16208 | 0.73 | 50 | 4.3 | 1 | Inventive example |
| 42 | 27 | 67 | 6 | 82 | 0.22 | 0.14 | 739 | 1012 | 16 | 16192 | 0.73 | 46 | 4.3 | 1 | Inventive example |
| 43 | 21 | 73 | 6 | 77 | 0.26 | 0.08 | 699 | 1008 | 14 | 14112 | 0.69 | 43 | 4.6 | 1 | Inventive example |
| 44 | 26 | 69 | 5 | 84 | 0.23 | 0.09 | 753 | 1017 | 16 | 16272 | 0.74 | 41 | 4.6 | 1 | Inventive example |

| No. | Steel sheet microstructure Amount of hydrogen in steel | | | | | | Steel sheet characteristics | | | | | | | | Notes |
|---|---|---|---|---|---|---|---|---|---|---|---|---|---|---|---|
| | Ferrite area fraction | Martensite + bainite (M+B) area fraction | Retained γ area fraction | *1 Area fraction | Amount of diffusible hydrogen (room temperature to 200°C) | Amount of trapped hydrogen (350°C to 600°C) | YS | TS | EL | TS·EL | YR | λ% | R/t | Crack observation | |
| | % | % | % | % | ppm by mass | ppm by mass | MPa | MPa | % | MPa·% | | | | | |
| 45 | 26 | 70 | 4 | 76 | 0.23 | 0.11 | 808 | 1036 | 15 | 15540 | 0.78 | 40 | 4.6 | 1 | Inventive example |
| 46 | 23 | 72 | 5 | 82 | 0.23 | 0.11 | 803 | 1029 | 15 | 15435 | 0.78 | 48 | 4.3 | 1 | Inventive example |
| 47 | 20 | 74 | 6 | 81 | 0.22 | 0.08 | 720 | 1000 | 16 | 16000 | 0.72 | 46 | 4.3 | 1 | Inventive example |
| 48 | 28 | 68 | 4 | 81 | 0.26 | 0.10 | 796 | 1034 | 15 | 15510 | 0.77 | 42 | 4.6 | 1 | Inventive example |
| 49 | 23 | 73 | 4 | 83 | 0.24 | 0.10 | 794 | 1005 | 16 | 16080 | 0.79 | 41 | 4.6 | 1 | Inventive example |
| 50 | 26 | 69 | 5 | 82 | 0.24 | 0.14 | 769 | 1025 | 16 | 16400 | 0.75 | 49 | 4.3 | 1 | Inventive example |
| 51 | 28 | 68 | 4 | 82 | 0.24 | 0.14 | 662 | 1019 | 16 | 16304 | 0.65 | 48 | 4.3 | 1 | Inventive example |
| 52 | 25 | 71 | 4 | 80 | 0.22 | 0.14 | 781 | 1028 | 15 | 15420 | 0.76 | 43 | 4.6 | 1 | Inventive example |
| 53 | 20 | 74 | 6 | 82 | 0.20 | 0.13 | 771 | 1015 | 16 | 16240 | 0.76 | 50 | 4.3 | 1 | Inventive example |
| 54 | 25 | 70 | 5 | 84 | 0.26 | 0.09 | 833 | 1016 | 16 | 16256 | 0.82 | 47 | 4.3 | 1 | Inventive example |
| 55 | 27 | 68 | 5 | 82 | 0.23 | 0.08 | 831 | 1001 | 16 | 16016 | 0.83 | 44 | 4.6 | 1 | Inventive example |

EP 4 663 784 A1

32

(continued)

| No. | Steel sheet microstructure Amount of hydrogen in steel | | | | | | Steel sheet characteristics | | | | | | | | Notes |
|---|---|---|---|---|---|---|---|---|---|---|---|---|---|---|---|
| | Ferrite area fraction | Martensite + bainite (M+B) area fraction | Retained $\gamma$ area fraction | *1 Area fraction | Amount of diffusible hydrogen (room temperature to 200°C) | Amount of trapped hydrogen (350°C to 600°C) | YS | TS | EL | TS·EL | YR | $\lambda$% | R/t | Crack observation | |
| | % | % | % | % | ppm by mass | ppm by mass | MPa | MPa | % | MPa·% | | | | | |
| 56 | 17 | 77 | 6 | 72 | 0.22 | 0.14 | 1050 | 1176 | 11 | 12936 | 0.89 | 37 | 5.0 | 2 | Inventive example |

(*1) The ratio of tempered martensite containing carbide with an average grain size of 50 nm or more and 200 nm or less to the entire martensite (1/8 to 3/8 of the sheet thickness)

<Example 2>

A steel with the chemical composition shown in Table 1 was used to manufacture a cold-rolled steel sheet with a thickness of 1.4 mm under the conditions shown in Table 4, to manufacture a hot-dip galvanized steel sheet or a hot-dip galvannealed steel sheet, to evaluate the steel sheet in the same manner as in Example 1, and to further evaluate the steel sheet as described below.

For all of the steel sheets, in the hot rolling step, the slab heating temperature was 1250°C, the finish rolling delivery temperature was 900°C, and the coiling temperature was 520°C. The reheating treatment in the reheating step was performed in the atmosphere.

In Example 2, some steel sheets (steel sheets with "Yes" in Pre-coating step in Table 4) were subjected to a treatment of applying metal coating in the pre-coating step after the cold rolling step and before the reduction step (before the oxidation step when the treatment in the oxidation step was performed), as compared with Example 1.

Table 5 shows the evaluation results.

The galvanizing treatment and the alloying treatment in the galvanization step were performed in the same manner as in Example 1.

[Table 4]

| No. | Steel symbol | Cold rolling step Rolling reduction % | Pre-coating step Presence or absence (coating type) | Oxidation step Oxygen concentration vol. ppm | Oxidation step Highest temperature reached °C | Reduction step Highest temperature reached °C | Reduction step Holding time s | Reduction step Dew point °C | Reduction step Hydrogen concentration vol. % | Soaking step Annealing temperature °C | Soaking step Holding time s | Soaking step Dew point °C | Soaking step Hydrogen concentration vol. % | First cooling step Dew point °C | First cooling step Hydrogen concentration vol. % | First cooling step Average cooling rate °C/s | Alloying treatment after galvanization step Yes: O No: - | Ms °C | Second cooling step Average cooling rate from 350°C to 450°C down to (Ms-100°C) °C/s | Second cooling step 100°C to 350°C residence time s | Second cooling step Cooling stop temperature °C | Reheating step Reheating temperature °C | Reheating step Holding time s | Material type | Notes |
|---|---|---|---|---|---|---|---|---|---|---|---|---|---|---|---|---|---|---|---|---|---|---|---|---|---|
| 57 | A | 50 | Absent | 2000 | 650 | 820 | 25 | -15 | 15 | 811 | 50 | -15 | 2 | -35 | 5 | 10 | O | 390 | 5 | 20 | 200 | 400 | 60 | GA | Inventive example |
| 58 | A | 50 | Absent | 2000 | 650 | 820 | 25 | -15 | 15 | 835 | 50 | 10 | 2 | -35 | 5 | 10 | O | 390 | 5 | 20 | 200 | 400 | 60 | GA | Inventive example |
| 59 | A | 50 | Present (Fe) | - | - | 820 | 25 | -15 | 15 | 817 | 50 | -15 | 2 | -35 | 5 | 10 | O | 390 | 5 | 20 | 200 | 400 | 60 | GA | Inventive example |
| 60 | A | 50 | Present (Fe) | 2000 | 650 | 820 | 25 | -15 | 15 | 817 | 50 | -15 | 2 | -35 | 5 | 10 | O | 390 | 5 | 20 | 200 | 400 | 60 | GA | Inventive example |
| 61 | A | 50 | Present (Fe) | - | - | 820 | 25 | -15 | 15 | 810 | 50 | 10 | 2 | -35 | 5 | 10 | O | 390 | 5 | 20 | 200 | 400 | 60 | GA | Inventive example |
| 62 | A | 50 | Present (Ni) | - | - | 820 | 25 | -15 | 15 | 829 | 50 | 10 | 2 | -35 | 5 | 10 | O | 390 | 5 | 20 | 200 | 400 | 60 | GA | Inventive example |
| 63 | A | 50 | Absent | 2000 | 650 | 820 | 25 | -15 | 15 | 823 | 50 | 10 | 2 | -35 | 5 | 10 | - | 390 | 5 | 20 | 200 | 400 | 60 | GI | Inventive example |
| 64 | A | 50 | Present (Fe) | - | - | 820 | 25 | -15 | 15 | 820 | 50 | -15 | 2 | -35 | 5 | 10 | - | 390 | 5 | 20 | 200 | 400 | 60 | GI | Inventive example |
| 65 | A | 50 | Present (Fe) | - | - | 820 | 25 | -15 | 15 | 814 | 50 | 10 | 2 | -35 | 5 | 10 | - | 390 | 5 | 20 | 200 | 400 | 60 | GI | Inventive example |
| 66 | B | 50 | Absent | 2000 | 650 | 820 | 25 | -15 | 15 | 830 | 50 | -15 | 2 | -35 | 5 | 10 | O | 395 | 5 | 20 | 200 | 400 | 60 | GA | Inventive example |
| 67 | B | 50 | Absent | 2000 | 650 | 820 | 25 | -15 | 15 | 833 | 50 | 10 | 2 | -35 | 5 | 10 | O | 395 | 5 | 20 | 200 | 400 | 60 | GA | Inventive example |
| 68 | B | 50 | Present (Fe) | - | - | 820 | 25 | -15 | 15 | 835 | 50 | -15 | 2 | -35 | 5 | 10 | O | 395 | 5 | 20 | 200 | 400 | 60 | GA | Inventive example |
| 69 | B | 50 | Present (Fe) | - | - | 820 | 25 | -15 | 15 | 819 | 50 | 10 | 2 | -35 | 5 | 10 | O | 395 | 5 | 20 | 200 | 400 | 60 | GA | Inventive example |
| 70 | B | 50 | Present (Ni) | - | - | 820 | 25 | -15 | 15 | 833 | 50 | 10 | 2 | -35 | 5 | 10 | O | 395 | 5 | 20 | 200 | 400 | 60 | GA | Inventive example |
| 71 | B | 50 | Absent | 2000 | 650 | 820 | 25 | -15 | 15 | 806 | 50 | 10 | 2 | -35 | 5 | 10 | - | 395 | 5 | 20 | 200 | 400 | 60 | GI | Inventive example |
| 72 | B | 50 | Present (Fe) | 2000 | 650 | 820 | 25 | -15 | 15 | 805 | 50 | -15 | 2 | -35 | 5 | 10 | - | 395 | 5 | 20 | 200 | 400 | 60 | GI | Inventive example |
| 73 | B | 50 | Present (Fe) | 2000 | 650 | 820 | 25 | -15 | 15 | 829 | 50 | 10 | 2 | -35 | 5 | 10 | - | 395 | 5 | 20 | 200 | 400 | 60 | GI | Inventive example |
| 74 | C | 50 | Absent | 2000 | 650 | 820 | 25 | -15 | 15 | 813 | 50 | -15 | 2 | -35 | 5 | 10 | O | 384 | 5 | 20 | 200 | 400 | 60 | GA | Inventive example |
| 75 | C | 50 | Absent | 2000 | 650 | 820 | 25 | -15 | 15 | 806 | 50 | 5 | 2 | -35 | 5 | 10 | O | 384 | 5 | 20 | 200 | 400 | 60 | GA | Inventive example |
| 76 | C | 50 | Present (Fe) | - | - | 820 | 25 | -15 | 15 | 807 | 50 | -15 | 2 | -35 | 5 | 10 | O | 384 | 5 | 20 | 200 | 400 | 60 | GA | Inventive example |
| 77 | C | 50 | Present (Fe) | - | - | 820 | 25 | -15 | 15 | 819 | 50 | 5 | 2 | -35 | 5 | 10 | O | 384 | 5 | 20 | 200 | 400 | 60 | GA | Inventive example |
| 78 | C | 50 | Present (Ni) | - | - | 820 | 25 | -15 | 15 | 834 | 50 | 5 | 2 | -35 | 5 | 10 | O | 384 | 5 | 20 | 200 | 400 | 60 | GA | Inventive example |
| 79 | C | 50 | Absent | 2000 | 650 | 820 | 25 | -15 | 15 | 807 | 50 | 5 | 2 | -35 | 5 | 10 | - | 384 | 5 | 20 | 200 | 400 | 60 | GI | Inventive example |
| 80 | C | 50 | Present (Fe) | - | - | 820 | 25 | -15 | 15 | 831 | 50 | -15 | 2 | -35 | 5 | 10 | - | 384 | 5 | 20 | 200 | 400 | 60 | GI | Inventive example |
| 81 | C | 50 | Present (Fe) | - | - | 820 | 25 | -15 | 15 | 814 | 50 | 5 | 2 | -35 | 5 | 10 | - | 384 | 5 | 20 | 200 | 400 | 60 | GI | Inventive example |

The tensile test, the hole expansion test, the microstructure observation, the quantitative determination of hydrogen in the steel, the bending test, and evaluation of the hydrogen embrittlement resistance were performed in the same manner as in Example 1.

<U-Bending + Tight Bending Test>

A U-bending + tight bending test is conducted as described below.

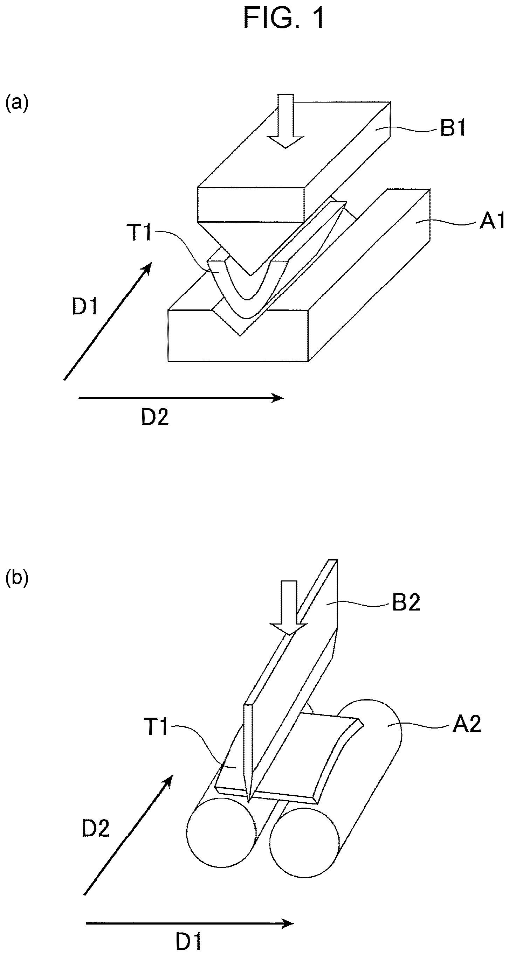

A 60 mm x 30 mm test specimen was taken from the resulting galvanized steel sheet by shearing and end surface grinding. The 60-mm sides are parallel to the width (C) direction. U-bending (primary bending) was performed at a radius of curvature/sheet thickness of 4.2 in the width (C) direction with respect to an axis extending in the rolling (L) direction to prepare a test specimen. In the U-bending (primary bending), as illustrated in Fig. 1(a), a punch B1 was pushed into a steel sheet placed on a die A1 to prepare a test specimen T1. Next, as illustrated in Fig. 1(b), the test specimen T1 placed on support rolls A2 was crushed with a punch B2 in tight bending (secondary bending). In Figs. 1(a) and 1(b), D1 denotes the width (C) direction, and D2 denotes the rolling (L) direction.

The conditions for U-bending in the U-bending + tight bending test are as follows:

Test method: roll support, punch indentation
Punch tip R: 5.0 mm
Distance between rolls: sheet thickness x 2 mm
Stroke speed: 10 mm/min
Bending direction: direction (C) perpendicular to rolling direction

The conditions for tight bending in the U-bending + tight bending test are as follows:

Spacer thickness: changes in 0.5 mm increments
Test method: die support, punch indentation
Forming load: 10 ton
Test speed: 10 mm/min
Holding time: 5 seconds
Bending direction: direction (C) perpendicular to rolling direction

The U-bending + tight bending test was performed three times to determine the critical spacer thickness (ST) at which no cracking occurred in all three tests. A crack with a length of 200 $\mu$m or more was judged to be a crack using a stereomicroscope manufactured by Leica at a magnification of 25 times. ST serves as a measure to evaluate the fracture resistance characteristics in case of a collision (the fracture resistance characteristics of a vertical wall portion in an axial crushing test). The results are also shown in Table 5.

The following (A) and (B) were evaluated as high fracture resistance characteristics in case of a collision (fracture resistance characteristics of the vertical wall portion in the axial crushing test).

(A) For

$$780 \text{ MPa} \leq \text{TS} < 980 \text{ MPa}, \ 2.0 \text{ mm} \geq \text{ST}$$

(B) For

$$980 \text{ MPa} \leq \text{TS} < 1180 \text{ MPa}, \ 3.0 \text{ mm} \geq \text{ST}$$

<V-bending + Orthogonal VDA Bending Test>

A V-bending + orthogonal VDA bending test is conducted as described below.

A 60 mm x 65 mm test specimen was taken from the resulting galvanized steel sheet by shearing and end grinding. The 60-mm sides are parallel to the rolling (L) direction. 90-degree bending (primary bending) was performed at a radius of curvature/sheet thickness of 4.2 in the rolling (L) direction with respect to an axis extending in the width (C) direction to prepare a test specimen. In the 90-degree bending (primary bending), as illustrated in Fig. 1(a), the punch B1 was pushed into a steel sheet placed on the die A1 with a V-groove to prepare a test specimen T1. Next, as illustrated in Fig. 1(b), the punch B2 was pushed into the test specimen T1 placed on the support rolls A2 in the orthogonal bending (secondary bending) such that the bending direction was perpendicular to the rolling direction. In Figs. 1(a) and 1(b), D1 denotes the width (C) direction, and D2 denotes the rolling (L) direction.

The conditions for V-bending in the V-bending + orthogonal VDA bending test are as follows:

Test method: die support, punch indentation
Forming load: 10 ton
Test speed: 30 mm/min
Holding time: 5 seconds
Bending direction: rolling (L) direction

The conditions for VDA bending in the V-bending + orthogonal VDA bending test are as follows:

Test method: roll support, punch indentation
Roll diameter: $\varphi$30 mm
Punch tip R: 0.4 mm
Distance between rolls: (sheet thickness x 2) + 0.5 mm
Stroke speed: 20 mm/min

Test specimen size: 60 mm x 60 mm
Bending direction: direction (C) perpendicular to rolling direction

A stroke at the maximum load is determined from a stroke-load curve obtained by the VDA bending. The average value of the stroke at the maximum load in the V-bending + orthogonal VDA bending test performed three times is defined as SFmax (mm). SFmax serves as a measure to evaluate the fracture resistance characteristics in case of a collision (the fracture resistance characteristics of a bending ridge line portion in an axial crushing test). The results are also shown in Table 5. The following (A) and (B) were evaluated as high fracture resistance characteristics in case of a collision (fracture resistance characteristics of the bending ridge line portion in the axial crushing test).

(A) For

$$780 \text{ MPa} \leq \text{TS} < 980 \text{ MPa}, \; 29.5 \text{ mm} \leq \text{SFmax}$$

(B) For

$$980 \text{ MPa} \leq \text{TS} < 1180 \text{ MPa}, \; 28.5 \text{ mm} \leq \text{SFmax}$$

<Axial Crushing Test>

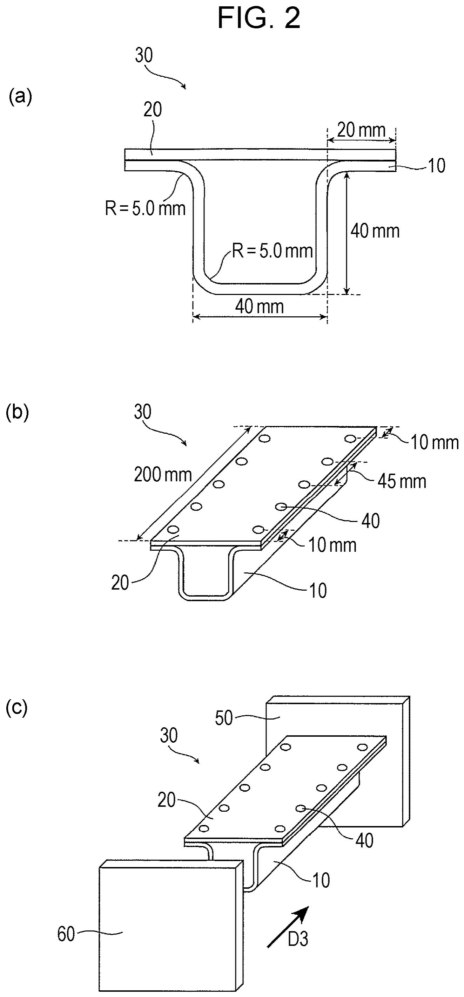

A 160 mm x 200 mm test specimen was taken from the resulting hot-dip galvanized steel sheet by shearing. The 160-mm sides are parallel to the rolling (L) direction. A hat-shaped member 10 with a depth of 40 mm illustrated in Figs. 2(a) and 2(b) was manufactured by forming (bending) with a die having a punch corner radius of 5.0 mm and a die corner radius of 5.0 mm. The steel sheet used as the material of the hat-shaped member was separately cut into a size of 80 mm x 200 mm. Next, a steel sheet 20 thus cut out and the hat-shaped member 10 were spot-welded to manufacture a test member 30 as illustrated in Figs. 2(a) and 2(b). Fig. 2(a) is a front view of the test member 30 manufactured by spot-welding the hat-shaped member 10 and the steel sheet 20. Fig. 2(b) is a perspective view of the test member 30. As illustrated in Fig. 2(b), spot welds 40 were positioned such that the distance between an end portion of the steel sheet and a weld was 10 mm and the distance between the welds was 20 mm. Next, as illustrated in Fig. 2(c), the test member 30 was joined to a base sheet 50 by TIG welding to prepare a sample for the axial crushing test. Next, an impactor 60 was caused to collide with the prepared sample for the axial crushing test at a constant collision speed of 10 mm/min, and the sample for the axial crushing test was crushed by 70 mm. As illustrated in Fig. 2(c), the crushing direction D3 was parallel to the longitudinal direction of the test member 30. The results are also shown in Table 5.

Evaluation of Axial Crush Fracture (Visible Crack)

More preferable (Excellent): No visible cracks were observed in the sample after the axial crushing test.
Preferable (Good): One or less visible cracks were observed in the sample after the axial crushing test

The U-bending + tight bending test, the V-bending + orthogonal VDA bending test, and the axial crushing test of galvanized steel sheets with a thickness of more than 1.2 mm were all performed on the steel sheets with a thickness of 1.2 mm in consideration of the influence of the sheet thickness. A steel sheet with a thickness of more than 1.2 mm was ground on one side to have a thickness of 1.2 mm. Since the bendability of the steel sheet surface may be affected by grinding, the ground surface was on the inside (valley side) of the bend in the U-bending + tight bending test, the ground surface was on the outside (mountain side) of the bend in the V-bending test in the V-bending + orthogonal VDA bending test, and the ground surface was on the inside (valley side) of the bend in the subsequent VDA bending test. On the other hand, in the U-bending + tight bending test, the V-bending + orthogonal VDA bending test, and the axial crushing test of galvanized steel sheets with a thickness of 1.2 mm or less, the tests were performed without grinding the steel sheets because the sheet thickness had a small influence.

When the nanohardness was measured at 300 or more points in a 50 $\mu$m x 50 $\mu$m region of a sheet surface at a quarter depth position of the surface soft layer from the surface of the base steel sheet in the thickness direction, in a case where the ratio of the nanohardness of 7.0 GPa or more was 0.10 or less, it was possible to further suppress the formation and connection of voids and crack growth in a hard microstructure (martensite or the like), an inclusion, or the like during press forming and in case of a collision and to achieve good R/t and SFmax.

The coating was peeled off and was followed by mechanical polishing to the quarter depth position of the surface soft layer from the surface of the base steel sheet in the thickness direction - 5 $\mu$m, by buffing with diamond and alumina to the quarter depth position of the surface soft layer from the base surface layer in the thickness direction, and then by colloidal silica polishing. The nanohardness was measured at 512 points in total with Hysitron tribo-950 and a Berkovich diamond indenter under the conditions of a load of 500 $\mu$N, a measurement region of 50 $\mu$m x 50 $\mu$m, and a dot spacing of 2 $\mu$m.

When the nanohardness of the sheet surface at the quarter depth position of the surface soft layer from surface of the base steel sheet in the thickness direction had a standard deviation $\sigma$ of 1.8 GPa or less, and when the nanohardness of the sheet surface at a half depth position of the surface soft layer from the surface of the base steel sheet in the thickness direction had a standard deviation $\sigma$ of 2.2 GPa or less, it was possible to further suppress the formation and connection of voids and crack growth during press forming and in case of a collision and achieve good R/t and SFmax.

For a steel sheet on which a metal coated layer was further formed after a galvanized layer was peeled off, peeling of the metal coated layer was followed by mechanical polishing to the quarter depth position of the surface soft layer from the surface of the base steel sheet in the thickness direction, by buffing with diamond and alumina, and by colloidal silica polishing. The nanohardness was measured at 512 points in total with Hysitron tribo-950 and a Berkovich diamond indenter under the conditions of a load of 500 $\mu$N, a measurement region of 50 $\mu$m x 50 $\mu$m, and a dot spacing of 2 $\mu$m.

Next, mechanical polishing to the half depth position of the surface soft layer in the thickness direction, buffing with diamond and alumina, and colloidal silica polishing were performed. The nanohardness was measured at 512 points in total with Hysitron tribo-950 and a Berkovich diamond indenter under the conditions of a load of 500 $\mu$N, a measurement region of 50 $\mu$m x 50 $\mu$m, and a dot spacing of 2 $\mu$m.

[Table 5]

| No. | Steel sheet microstructure | | | | Amount of hydrogen in steel | | Surface layer | | Sheet surface nanohardness Hn | | | Steel sheet characteristics | | | | | | | | | | | Notes |
|---|---|---|---|---|---|---|---|---|---|---|---|---|---|---|---|---|---|---|---|---|---|---|---|
| | Ferrite area fraction | Martensite + bainite (M+B) area fraction | Retained γ area fraction | *1 Area fraction | Amount of diffusible hydrogen (room temperature to 200°C) | Amount of trapped hydrogen (350°C to 600°C) | Soft layer thickness | Metal coating weight | Ratio of Hn = 7.0 GPa or more (*2) | Quarter position Hn standard deviation (*3) | Half position Hn standard deviation (*4) | YS | TS | EL | TS·EL | YR | λ | R/t | Crack observation | U-bending + tight bending ST | V-bending + orthogonal VDA bending SFmax | Axial crushing characteristics | |
| | % | % | % | % | ppm by mass | ppm by mass | μm | g/m² | | GPa | GPa | MPa | MPa | % | MPa·% | | % | | | | | | |
| 57 | 22 | 72 | 6 | 74 | 0.24 | 0.15 | 8 | - | 0.19 | 1.9 | 2.3 | 771 | 1032 | 17 | 17544 | 0.75 | 46 | 4.3 | 1 | 3.5 | 28.2 | Good | Inventive example |
| 58 | 25 | 70 | 5 | 75 | 0.21 | 0.08 | 37 | - | 0.06 | 1.4 | 1.5 | 766 | 1014 | 15 | 15210 | 0.76 | 47 | 2.9 | 1 | 2.0 | 29.3 | Excellent | Inventive example |
| 59 | 22 | 73 | 5 | 72 | 0.18 | 0.08 | 12 | 10.0 | 0.08 | 1.6 | 2.0 | 734 | 1026 | 16 | 16416 | 0.72 | 44 | 3.6 | 1 | 2.5 | 29.0 | Excellent | Inventive example |
| 60 | 23 | 72 | 5 | 73 | 0.17 | 0.08 | 12 | 10.0 | 0.09 | 1.7 | 2.0 | 729 | 1021 | 16 | 16336 | 0.71 | 45 | 3.6 | 1 | 2.5 | 29.1 | Excellent | Inventive example |
| 61 | 23 | 69 | 7 | 76 | 0.20 | 0.10 | 47 | 10.0 | 0.02 | 0.7 | 0.8 | 735 | 1070 | 14 | 14980 | 0.69 | 46 | 1.1 | 1 | 1.0 | 29.9 | Excellent | Inventive example |
| 62 | 21 | 73 | 6 | 74 | 0.24 | 0.11 | 49 | 10.0 | 0.02 | 0.8 | 1.0 | 736 | 1061 | 16 | 16976 | 0.69 | 48 | 1.4 | 1 | 1.0 | 29.8 | Excellent | Inventive example |
| 63 | 22 | 71 | 7 | 76 | 0.22 | 0.14 | 39 | - | 0.05 | 1.5 | 1.5 | 787 | 1038 | 17 | 17646 | 0.76 | 46 | 2.9 | 1 | 2.0 | 29.3 | Excellent | Inventive example |
| 64 | 22 | 73 | 5 | 76 | 0.25 | 0.10 | 13 | 10.0 | 0.08 | 1.6 | 1.8 | 749 | 1046 | 15 | 15690 | 0.72 | 45 | 3.6 | 1 | 2.5 | 29.0 | Excellent | Inventive example |
| 65 | 20 | 74 | 6 | 75 | 0.22 | 0.14 | 46 | 10.0 | 0.01 | 0.6 | 0.7 | 757 | 1057 | 17 | 17969 | 0.72 | 48 | 1.1 | 1 | 1.0 | 29.9 | Excellent | Inventive example |
| 66 | 23 | 72 | 5 | 74 | 0.21 | 0.12 | 7 | - | 0.22 | 2.1 | 2.3 | 782 | 1062 | 16 | 16992 | 0.74 | 45 | 4.6 | 1 | 3.5 | 28.3 | Good | Inventive example |
| 67 | 23 | 71 | 6 | 74 | 0.22 | 0.12 | 38 | - | 0.10 | 1.6 | 2.0 | 792 | 1022 | 15 | 15330 | 0.77 | 43 | 3.2 | 1 | 2.0 | 29.0 | Excellent | Inventive example |
| 68 | 21 | 73 | 6 | 74 | 0.20 | 0.10 | 10 | 16.0 | 0.09 | 1.5 | 1.9 | 785 | 1006 | 15 | 15090 | 0.78 | 45 | 3.9 | 1 | 2.5 | 28.6 | Excellent | Inventive example |
| 69 | 23 | 71 | 6 | 77 | 0.19 | 0.08 | 48 | 16.0 | 0.05 | 0.7 | 1.2 | 778 | 1049 | 14 | 14686 | 0.74 | 46 | 1.4 | 1 | 1.0 | 29.5 | Excellent | Inventive example |
| 70 | 20 | 73 | 7 | 76 | 0.19 | 0.15 | 43 | 16.0 | 0.04 | 0.9 | 1.2 | 743 | 1013 | 13 | 13169 | 0.73 | 45 | 1.8 | 1 | 1.0 | 29.4 | Excellent | Inventive example |
| 71 | 20 | 72 | 5 | 76 | 0.21 | 0.15 | 36 | - | 0.09 | 1.5 | 1.9 | 751 | 1045 | 13 | 13585 | 0.72 | 45 | 3.2 | 1 | 2.0 | 29.0 | Excellent | Inventive example |
| 72 | 23 | 71 | 5 | 74 | 0.20 | 0.09 | 11 | 16.0 | 0.09 | 1.8 | 2.1 | 747 | 1002 | 16 | 16032 | 0.75 | 48 | 3.9 | 1 | 2.5 | 28.6 | Excellent | Inventive example |
| 73 | 21 | 72 | 7 | 77 | 0.18 | 0.08 | 47 | 16.0 | 0.02 | 0.8 | 1.1 | 770 | 1007 | 13 | 13091 | 0.76 | 47 | 1.4 | 1 | 1.0 | 29.5 | Excellent | Inventive example |
| 74 | 59 | 38 | 3 | 81 | 0.07 | 0.15 | 13 | - | 0.15 | 2.0 | 2.4 | 664 | 825 | 23 | 18975 | 0.80 | 64 | 3.6 | 1 | 2.5 | 29.2 | Good | Inventive example |
| 75 | 56 | 38 | 3 | 78 | 0.09 | 0.15 | 43 | - | 0.05 | 1.3 | 1.3 | 655 | 832 | 21 | 17472 | 0.79 | 64 | 1.8 | 1 | 1.0 | 30.3 | Excellent | Inventive example |
| 76 | 57 | 36 | 3 | 81 | 0.09 | 0.08 | 16 | 12.0 | 0.08 | 1.7 | 1.9 | 661 | 838 | 21 | 17598 | 0.79 | 67 | 2.5 | 1 | 1.5 | 29.9 | Excellent | Inventive example |
| 77 | 59 | 32 | 5 | 77 | 0.09 | 0.11 | 50 | 12.0 | 0.02 | 0.4 | 0.7 | 662 | 802 | 20 | 16040 | 0.83 | 69 | 0.0 | 1 | 0.0 | 30.9 | Excellent | Inventive example |
| 78 | 59 | 37 | 4 | 78 | 0.11 | 0.10 | 48 | 12.0 | 0.03 | 0.7 | 1.0 | 673 | 802 | 23 | 18446 | 0.84 | 64 | 0.4 | 1 | 0.5 | 30.8 | Excellent | Inventive example |
| 79 | 56 | 40 | 4 | 80 | 0.09 | 0.12 | 40 | - | 0.05 | 1.1 | 1.3 | 653 | 838 | 20 | 16760 | 0.78 | 66 | 1.8 | 1 | 1.0 | 30.3 | Excellent | Inventive example |
| 80 | 59 | 36 | 3 | 77 | 0.08 | 0.13 | 14 | 12.0 | 0.08 | 1.6 | 1.7 | 666 | 831 | 22 | 18282 | 0.80 | 61 | 2.5 | 1 | 1.5 | 29.9 | Excellent | Inventive example |
| 81 | 60 | 33 | 4 | 82 | 0.09 | 0.15 | 47 | 12.0 | 0.08 | 0.4 | 0.5 | 659 | 804 | 23 | 18492 | 0.82 | 68 | 0.0 | 1 | 0.0 | 30.9 | Excellent | Inventive example |

(*1) The ratio of tempered martensite containing carbide with an average grain size of 50 nm or more and 200 nm or less to the entire martensite (1/8 to 3/8 of the sheet thickness)

(*2) The ratio of the number of measurements in which the nanohardness of the sheet surface at the quarter depth position of the surface soft layer from the surface of the base steel sheet in the thickness direction is 7.0 GPa or more

(*3) The standard deviation σ of the nanohardness of the sheet surface at the quarter depth position of the surface soft layer from the surface of the base steel sheet in the thickness direction

(*4) The standard deviation σ of the nanohardness of the sheet surface at the half depth position of the surface soft layer from the surface of the base steel sheet in the thickness direction

From Examples 1 and 2, the galvanized steel sheets of the inventive examples had a TS of 780 MPa or more and 1180 MPa or less and a YR of 0.60 or more, contained 0.45 ppm by mass or less of diffusible hydrogen in the steel, and had high stretch flangeability, bendability, and hydrogen embrittlement resistance. The steel sheets of the comparative examples were inferior in at least one of TS, YR, stretch flangeability, bendability, and hydrogen embrittlement resistance.

In Example 2, when the dew point was -15°C, the surface soft layer had a thickness of less than 17 $\mu$m, and fracture (visible crack) in the axial crushing test was evaluated to be "Good", and even when the surface soft layer had a thickness of less than 17 $\mu$m, in a case where the metal coated layer was provided, the fracture resistance characteristics was good, and fracture (visible crack) in the axial crushing test was evaluated to be "Excellent".

Furthermore, the members manufactured by performing forming or joining using the galvanized steel sheets of the inventive examples had a TS of 780 MPa or more and 1180 MPa or less and a YR of 0.60 or more, contained 0.45 ppm by mass or less of diffusible hydrogen in the steel, and had high stretch flangeability, bendability, and hydrogen embrittlement resistance.

Reference Signs List

| | |
|---|---|
| 10 | hat-shaped member |
| 20 | galvanized steel sheet |
| 30 | test member |
| 40 | spot weld |
| 50 | base sheet |
| 60 | impactor |
| A1 | die |
| A2 | support rolls |
| B1 | punch |
| B2 | punch |
| D1 | width (C) direction |
| D2 | rolling (L) direction |
| D3 | crushing direction |
| T1 | test specimen |

Industrial Applicability

The present invention can provide a galvanized steel sheet with a tensile strength TS of 780 MPa or more and less than 1180 MPa, a yield ratio of 0.60 or more, and high bendability, stretch flangeability, and hydrogen embrittlement resistance, which is suitable mainly for automotive part applications.

**Claims**

1.   A galvanized steel sheet comprising: a base steel sheet; and a galvanized layer formed on the base steel sheet,

wherein the base steel sheet has a steel microstructure including, in terms of area fraction,
ferrite: less than 65%,
a total of martensite and bainite: 25% or more, and
retained austenite: 3% or more and 10% or less,
70% or more by area of the entire martensite in the steel microstructure at 1/8 to 3/8 of a thickness of the base steel sheet is tempered martensite containing carbide with an average grain size of 50 nm or more and 200 nm or less,
the galvanized steel sheet has a tensile strength of 780 MPa or more and less than 1180 MPa,
the galvanized steel sheet has a yield ratio of 0.60 or more, and
an integrated amount of hydrogen released when the base steel sheet is heated from room temperature to 200°C is 0.45 ppm by mass or less.

2.   The galvanized steel sheet according to Claim 1,
wherein

the base steel sheet has a steel component containing, on a mass percent basis,
C: 0.080% or more and 0.300% or less,
Si: 0.20% or more and 2.00% or less,
Mn: 1.00% or more and 4.00% or less,
P: 0.10% or less,
S: 0.0200% or less,
Al: 0.003% or more and 0.100% or less, and
N: 0.0100% or less, and
a remainder is composed of Fe and incidental impurities.

3.   The galvanized steel sheet according to Claim 2,
wherein

the steel component further contains, on a mass percent basis, at least one selected from

B: 0.0100% or less,
Ti: 0.200% or less,
Nb: 0.200% or less,
Sb: 0.200% or less,
Sn: 0.200% or less,
V: 0.100% or less,
Cu: 2.00% or less,
Cr: 2.00% or less,
Ni: 2.00% or less,
Mo: 1.00% or less,
Ta: 0.100% or less,
W: 0.500% or less,
Zr: 0.020% or less,
Ca: 0.0200% or less,
Mg: 0.0200% or less,
Zn: 0.020% or less,
Co: 0.020% or less,
Ce: 0.0200% or less,
Se: 0.0200% or less,
Te: 0.0200% or less,
Ge: 0.0200% or less,
As: 0.0200% or less,
Sr: 0.0200% or less,
Cs: 0.0200% or less,
Hf: 0.0200% or less,
Pb: 0.0200% or less,
Bi: 0.0200% or less, and
REM (excluding Ce): 0.0200% or less.

4. The galvanized steel sheet according to any one of Claims 1 to 3, wherein when a region of 200 $\mu$m or less from a surface of the base steel sheet in a thickness direction is defined as a surface layer, the base steel sheet has, in the surface layer, a surface soft layer with a Vickers hardness of 85% or less with respect to a Vickers hardness at a quarter thickness position.

5. The galvanized steel sheet according to Claim 4,
wherein when nanohardness is measured at 300 or more points in a 50 $\mu$m x 50 $\mu$m region of a sheet surface at a quarter depth position and at a half depth position of the surface soft layer from the surface of the base steel sheet in the thickness direction, a ratio of a number of measurements in which the sheet surface at the quarter depth position of the surface soft layer from the surface of the base steel sheet in the thickness direction has a nanohardness of 7.0 GPa or more to a total number of measurements is 0.10 or less, the nanohardness of the sheet surface at the quarter depth position of the surface soft layer from the surface of the base steel sheet in the thickness direction has a standard deviation $\sigma$ of 1.8 GPa or less, and the nanohardness of the sheet surface at the half depth position of the surface soft layer from the surface of the base steel sheet in the thickness direction has a standard deviation $\sigma$ of 2.2 GPa or less.

6. The galvanized steel sheet according to any one of Claims 1 to 5, comprising a metal coated layer formed between the base steel sheet and the galvanized layer on one or both surfaces of the galvanized steel sheet.

7. The galvanized steel sheet according to any one of Claims 1 to 6, wherein the galvanized layer is a galvannealed layer.

8. The galvanized steel sheet according to any one of Claims 1 to 7, wherein when the base steel sheet is heated from room temperature to 600°C, an integrated amount of hydrogen released in a temperature range of 350°C to 600°C is 0.05 ppm by mass or more.

9. A member produced by using the galvanized steel sheet according to any one of Claims 1 to 8.

10. A method for manufacturing a galvanized steel sheet, the method comprising:

a hot rolling step of heating a slab with the steel component according to Claim 2 or 3 to a temperature range of 1100°C to 1350°C, hot-rolling the slab at a finish rolling delivery temperature of 800°C to 950°C, and coiling the hot-rolled slab at a coiling temperature of 650°C or less;

a reduction step of holding a steel sheet after the hot rolling step at 700°C or more for 20 seconds or more in a reducing atmosphere with a hydrogen concentration of 8% or more by volume and 30% or less by volume;

a soaking step of holding the steel sheet after the reduction step at 750°C or more for 20 seconds or more and 300 seconds or less in a soaking atmosphere with a hydrogen concentration of 0.2% or more by volume and 8% or less by volume;

a first cooling step of cooling the steel sheet after the soaking step;

a galvanization step of forming a galvanized layer on a surface of the steel sheet after the first cooling step;

a second cooling step of cooling the steel sheet after the galvanization step to a cooling stop temperature of 100°C to 300°C at an average cooling rate of 20°C/s or less from a temperature range of 350°C to 450°C down to (Ms temperature - 100°C) while the steel sheet is retained in a temperature range of 100°C to 350°C for 5 seconds or more; and

a reheating step of holding the steel sheet after the second cooling step in a temperature range of the cooling stop temperature or higher and 450°C or less for 5 to 600 seconds.

11. The method for manufacturing a galvanized steel sheet according to Claim 10, wherein after the galvanization step, forming the galvanized layer on the surface of the steel sheet is followed by alloying treatment.

12. The method for manufacturing a galvanized steel sheet according to Claim 10 or 11, comprising a cold rolling step of performing cold rolling at a rolling reduction of 20% or more after the hot rolling step and before the reduction step.

13. The method for manufacturing a galvanized steel sheet according to any one of Claims 10 to 12, wherein in the first cooling step, the steel sheet after the soaking step is cooled from 600°C to 900°C down to 150°C to 500°C at an average cooling rate of 20°C/s or less in an atmosphere with a hydrogen concentration of 0.5% or more by volume and 30% or less by volume and with a dew point of 0°C or less.

14. The method for manufacturing a galvanized steel sheet according to any one of Claims 10 to 13, wherein in the second cooling step, cooling is performed to a cooling stop temperature of 100°C to 300°C at an average cooling rate of 10°C/s or less from a temperature range of 350°C to 450°C down to (Ms temperature - 100°C) while the steel sheet is retained in a temperature range of 100°C to 350°C for 10 seconds or more.

15. The method for manufacturing a galvanized steel sheet according to any one of Claims 10 to 14, wherein the soaking atmosphere in the soaking step is an atmosphere with a dew point of -30°C or more.

16. The method for manufacturing a galvanized steel sheet according to any one of Claims 10 to 15, comprising a precoating step of performing metal coating on one or both surfaces of the steel sheet after the hot rolling step and before the reduction step to form a metal coated layer.

17. The method for manufacturing a galvanized steel sheet according to any one of Claims 10 to 16, comprising an oxidation step of heating the steel sheet after the hot rolling step and before the reduction step to 600°C or more in an oxidizing atmosphere with an oxygen concentration of 1000 ppm by volume or more and 30000 ppm by volume or less.

18. A method for manufacturing a member, comprising a step of subjecting the galvanized steel sheet according to any one of Claims 1 to 8 to at least one of forming and joining to manufacture a member.

# FIG. 1

(a)

(b)

# FIG. 2

(a)

(b)

(c)

## INTERNATIONAL SEARCH REPORT

| International application No. |
| --- |
| **PCT/JP2023/016786** |

| A. | CLASSIFICATION OF SUBJECT MATTER |
| --- | --- |

*C21D 9/46*(2006.01)i; *C22C 38/00*(2006.01)i; *C22C 38/60*(2006.01)i; *C23C 2/06*(2006.01)i
FI:   C22C38/00 301T; C21D9/46 J; C21D9/46 T; C23C2/06; C22C38/60

According to International Patent Classification (IPC) or to both national classification and IPC

| B. | FIELDS SEARCHED |
| --- | --- |

Minimum documentation searched (classification system followed by classification symbols)

C21D9/46; C22C38/00-38/60; C23C2/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2018/030501 A1 (JFE STEEL CORPORATION) 15 February 2018 (2018-02-15) entire text | 1-18 |
| A | WO 2022/185804 A1 (JFE STEEL CORPORATION) 09 September 2022 (2022-09-09) entire text | 1-18 |
| A | WO 2018/123356 A1 (KABUSHIKI KAISHA KOBE SEIKO SHO) 05 July 2018 (2018-07-05) entire text | 1-18 |
| A | WO 2011/093319 A1 (NIPPON STEEL CORPORATION) 04 August 2011 (2011-08-04) entire text | 1-18 |
| A | JP 2015-175050 A (NIPPON STEEL & SUMITOMO METAL CORPORATION) 05 October 2015 (2015-10-05) entire text | 1-18 |
| A | WO 2021/200579 A1 (JFE STEEL CORPORATION) 07 October 2021 (2021-10-07) entire text | 1-18 |

[✓] Further documents are listed in the continuation of Box C.    [✓] See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **29 June 2023** | **11 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/016786** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2023/007833 A1 (JFE STEEL CORPORATION) 02 February 2023 (2023-02-02) entire text | 1-18 |
| A | WO 2022/138395 A1 (JFE STEEL CORPORATION) 30 June 2022 (2022-06-30) entire text | 1-18 |

Form PCT/ISA/210 (second sheet) (January 2015)

## INTERNATIONAL SEARCH REPORT
### Information on patent family members

International application No.

**PCT/JP2023/016786**

| Patent document cited in search report | | | Publication date (day/month/year) | Patent family member(s) | | | Publication date (day/month/year) |
|---|---|---|---|---|---|---|---|
| WO | 2018/030501 | A1 | 15 February 2018 | US | 2019/0271052 | A1 | |
| | | | | entire text | | | |
| | | | | EP | 3467135 | A1 | |
| | | | | KR | 10-2019-0022769 | A | |
| | | | | CN | 109563582 | A | |
| WO | 2022/185804 | A1 | 09 September 2022 | JP | 7111280 | B1 | |
| | | | | entire text | | | |
| WO | 2018/123356 | A1 | 05 July 2018 | JP | 2018-109222 | A | |
| | | | | entire text | | | |
| WO | 2011/093319 | A1 | 04 August 2011 | US | 2013/0037180 | A1 | |
| | | | | entire text | | | |
| | | | | EP | 2530179 | A1 | |
| | | | | CN | 102712980 | A | |
| | | | | KR | 10-2012-0096109 | A | |
| JP | 2015-175050 | A | 05 October 2015 | (Family: none) | | | |
| WO | 2021/200579 | A1 | 07 October 2021 | EP | 4130323 | A1 | |
| | | | | entire text | | | |
| | | | | KR | 10-2022-0145390 | A | |
| | | | | CN | 115349028 | A | |
| | | | | JP | 2022-23086 | A | |
| | | | | JP | 2022-24145 | A | |
| WO | 2023/007833 | A1 | 02 February 2023 | JP | 7197062 | B1 | |
| | | | | entire text | | | |
| WO | 2022/138395 | A1 | 30 June 2022 | JP | 7111279 | B1 | |
| | | | | entire text | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016113788 A

- JP 2011111671 A